# EUROPEAN PATENT APPLICATION

(11) **EP 1 589 446 A1**
(43) Date of publication of application: **26.10.2005**
(21) Application number: 03778756.1
(22) Date of filing: 10.12.2003
(51) Int. Cl.: G06F 17/60

(54) **INFORMATION PROCESSING SYSTEM, INFORMATION PROCESSING DEVICE, INFORMATION PROCESSING METHOD, PROGRAM, AND RECORDING MEDIUM**

(30) Priority: 30.01.2003 JP 2003021285
(71) Applicant: SONY CORPORATION, Tokyo 141-0001 (JP)
(72) Inventor: KAWAMURA, Makoto,c/o SONY CORPORATION, Tokyo 141-0001 (JP)
(74) Representative: Melzer, Wolfgang
(86) International application number: PCT/JP2003/015759
(87) International publication number: WO 2004/068379

(57) **Abstract**

The present invention relates to an information processing system, an information processing apparatus, and an information processing method, and to a program and a recording medium for preventing duplicated purchase of a license. A client 1 requests a license from a license server 4, acquires the license, and utilizes content based on the license. The license server 4 provides a license with which content is utilized. The client 1 determines whether or not the license requested from the license server 4 duplicates a license already held by the client 1. The client 1 informs its user that the license requested by the client 1 duplicates a license already held by the client 1 according to a determination result. The present invention is applicable to, for example, a computer which utilizes digital content by acquiring a license to utilize the content.

## Description

### Technical Field

The present invention relates to an information processing system, an information processing apparatus, and an information processing method, and to a program and a recording medium. In particular, the present invention relates to an information processing system, an information processing apparatus, and an information processing method, and to a program and a recording medium for preventing duplicated purchase of a license required to use content.

### Background Art

Recently, a system has been realized that enables a plurality of users to exchange music data for free such that a user sends his/her own music data to other users and receives unowned music data from other users via the Internet.

In such a system, theoretically, if one piece of content such as music exists, all other users can share the content, and hence many users do not purchase the content. As a result, content, as a copyrighted work, does not sell, and accordingly the copyright holder of the content is not paid a royalty (license fee) that should be paid for the use of copyrighted work along with the sale of the copyrighted work.

For this reason, it is socially demanded to prevent illegal use of content without preventing the distribution of the content.

The applicant of the present invention disclosed a method for providing content and a license and a method for using content while preventing illegal use of the content by employing a license server that provides a license for the content and a client that requests the license server to issue a license for use of the content based on the license (see, for example, Japanese Unexamined Patent Application Publication No. 2002-359616).

There are many types of license according to the usage of content. For example, a license may restrict the number of playbacks or playback period of content.

Thus, if a user of a client using content purchases a license which restricts, for example, the number of playbacks of the content, the user needs to purchase a new license to play back the content after the user has played back the content the number of playbacks allowed by the license.

Hence, the user of the client may mistakenly purchase a duplicate license. For example, if the user of the client having a license L1 allowing a piece of content C to be played back a predetermined number of times misunderstands that the number of playbacks allowed by the license L1 has run out, despite the fact that the number of playbacks is in fact available, the user may purchase a new license L2 that allows the content C to be played back a predetermined number of times.

In this case, the user purchases the license L2 in addition to the license L1, although a number of playbacks allowed by the license L1 is still available, i.e., the content C can be played back as allowed by the license L1. In short, the user pays for an unnecessary license.

### Disclosure of Invention

The present invention is based on these circumstances and prevents duplicate purchase of a license.

In an information processing system according to the present invention, one of a license server and a terminal includes duplicate-license determination means for determining whether or not a license requested by the terminal from the license server duplicates a license already held by the terminal, and the terminal includes license-duplication reporting means for reporting license duplication indicating that the license requested by the terminal from the license server duplicates a license already held by the terminal according to the determination result by the duplicate-license determination means.

A first information processing apparatus according to the present invention includes duplicate-license determination means for determining whether or not a license requested from a license server duplicates an already available license and license-duplication reporting means for reporting license duplication indicating that the license requested from the license server duplicates an already available license according to the determination result by the duplicate-license determination means.

A first method for processing information according to the present invention includes a duplicate-license determination step of determining whether or not a license requested from a license server duplicates an already available license and a license-duplication reporting step of reporting license duplication indicating that the license requested from the license server duplicates an already available license according to the determination result in the duplicate-license determination step.

A first program according to the present invention includes a duplicate-license determination step of determining whether or not a license requested from a license server duplicates an already available license and a license-duplication reporting step of reporting license duplication indicating that the license requested from the license server duplicates an already available license according to the determination result in the duplicate-license determination step.

In a first recording medium recording a program according to the present invention, the program includes a duplicate-license determination step of determining whether or not a license requested from a license server duplicates an already available license and a license-duplication reporting step of reporting license duplication indicating that the license requested from the license server duplicates an already available license according to the determination result in the duplicate-license determination step.

A second information processing apparatus according to the present invention includes determination-result receiving means for receiving from a license server a result of determination as to whether or not a license requested from the license server duplicates an already available license and license-duplication reporting means for reporting license duplication indicating that the license requested from the license server duplicates an already available license according to the result of determination as to license duplication received by the determination-result receiving means.

A second method for processing information according to the present invention includes a determination-result receiving step of receiving from a license server a result of determination as to whether or not a license requested from the license server duplicates an already available license and a license-duplication reporting step of reporting license duplication indicating that the license requested from the license server duplicates an already available license according to the result of determination as to license duplication received in the determination-result receiving step.

A second program according to the present invention includes a determination-result receiving step of receiving from a license server a result of determination as to whether or not a license requested from the license server duplicates an already available license and a license-duplication reporting step of reporting license duplication indicating that the license requested from the license server duplicates an already available license according to the result of determination as to license duplication received in the determination-result receiving step.

In a second recording medium recording a program according to the present invention, the program includes a determination-result receiving step of receiving from a license server a result of determination as to whether or not a license requested from the license server duplicates an already available license and a license-duplication reporting step of reporting license duplication indicating that the license requested from the license server duplicates an already available license according to the result of determination as to license duplication received in the determination-result receiving step.

A third information processing apparatus according to the present invention includes query means for making an inquiry about licenses already held by a terminal, duplicate-license determination means for determining whether or not a license requested by the terminal duplicates a license already held by the terminal, and determination-result sending means for sending the determination result by the duplicate-license determination means to the terminal.

A third method for processing information according to the present invention includes a query step of making an inquiry about licenses already held by a terminal, a duplicate-license determination step of determining whether or not a license requested by the terminal duplicates a license already held by the terminal, and a determination-result sending step of sending the determination result in the duplicate-license determination step to the terminal.

A third program according to the present invention includes a query step of making an inquiry about licenses already held by a terminal, a duplicate-license determination step of determining whether or not a license requested by the terminal duplicates a license already held by the terminal, and a determination-result sending step of sending the determination result in the duplicate-license determination step to the terminal.

In a third recording medium recording a program according to the present invention, the program includes a query step of making an inquiry about licenses already held by a terminal, a duplicate-license determination step of determining whether or not a license requested by the terminal duplicates a license already held by the terminal, and the determination-result sending step of sending the determination result in the duplicate-license determination step to the terminal.

In the information processing system according to the present invention, a determination is made in one of the license server and the terminal as to whether or not the license requested by the terminal from the license server duplicates a license already held by the terminal, and according to the determination result, license duplication indicating that the license requested by the terminal from the license server duplicates a license already held by the terminal is reported in the terminal.

In the first information processing apparatus, information processing method, program, and recording medium, a determination is made as to whether or not the license requested from the license server duplicates an already available license, and according to the determination result, license duplication indicating that the license requested from the license server duplicates an already available license is reported.

In the second information processing apparatus, information processing method, program, and recording medium, a result of determination as to whether or not the license requested from the license server duplicates an already available license is obtained from the license server, and according to the result of determination as to license duplication, license duplication indicating that the license requested from the license server duplicates an already available license is reported.

In the third information processing apparatus, information processing method, program, and recording medium, an inquiry is made about the licenses already held by the terminal and a determination is made as to whether or not the license requested by the terminal duplicates a license already held by the terminal. Then, the determination result is sent to the terminal.

### Brief Description of the Drawings

Fig. 1 is an illustration showing an exemplary structure of an embodiment of a content provision system according to the present invention.
Fig. 2 is a block diagram showing an exemplary hardware structure of a client 1.
Fig. 3 is a flowchart illustrating downloading.
Fig. 4 is a flowchart illustrating content provision.
Fig. 5 is an illustration showing the format of content data with header information.
Fig. 6 is a flowchart illustrating playback processing.
Fig. 7 is a flowchart illustrating a first embodiment of license acquisition.
Fig. 8 is an illustration showing the format (of data) of a license.
Fig. 9 is a flowchart illustrating details of duplicate-purchase prevention in step S68.
Fig. 10 is an illustration showing a license list.
Fig. 11A is an illustration showing a license selection screen and a duplication message.
Fig. 11B is an illustration showing a license selection screen and a duplication message.
Fig. 12 is a flowchart illustrating a first embodiment of license granting.
Fig. 13 is a flowchart illustrating details of duplicate-sale prevention in step S107.
Fig. 14 is a flowchart illustrating a second embodiment of license acquisition.
Fig. 15 is a flowchart illustrating details of duplicate-purchase prevention in step S167.
Fig. 16 is a flowchart illustrating a second embodiment of license granting.
Fig. 17 is a flowchart illustrating details of duplicate-sale prevention in step S206.
Fig. 18 is a flowchart illustrating a third embodiment of license acquisition.
Fig. 19 is a flowchart illustrating details of duplicate-purchase prevention in step S268.
Fig. 20 is a flowchart illustrating a third embodiment of license granting.
Fig. 21 is an illustration showing a user management table.
Fig. 22 is a flowchart illustrating details of duplicate-sale prevention in step S307.
Fig. 23 is an illustration showing an exemplary structure of another embodiment of a content provision system according to the present invention.

### Best Mode for Carrying Out the Invention

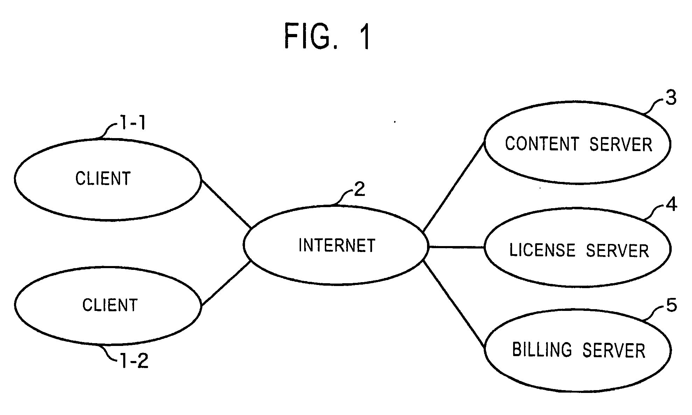

Fig. 1 shows an exemplary structure of a content provision system to which the present invention is applied.

Clients 1-1 and 1-2 (hereinafter, referred to just as a client 1 if it is not necessary to discriminate these clients individually) are connected to the Internet 2. In this example, only two clients are shown. In fact, any number of clients can be connected to the Internet 2.

Furthermore, a content server 3 providing content to the client 1, a license server 4 providing (selling) the client 1 with licenses necessary to use content provided by the content server 3, and a billing server 5 for billing the client 1 when the client 1 receives (purchases) a license are connected to the Internet 2.

Any number of these content server 3, license server 4, and billing server 5 are connected to the Internet 2.

The client 1 can be realized by a personal computer, as well as by consumer electronic (CE) devices such as a mobile phone, a personal digital assistant (PDA) device, an audio visual (AV) device, and a household appliance. In short, any type of device that can perform communication via, for example, the Internet 2 can be used as the client 1.

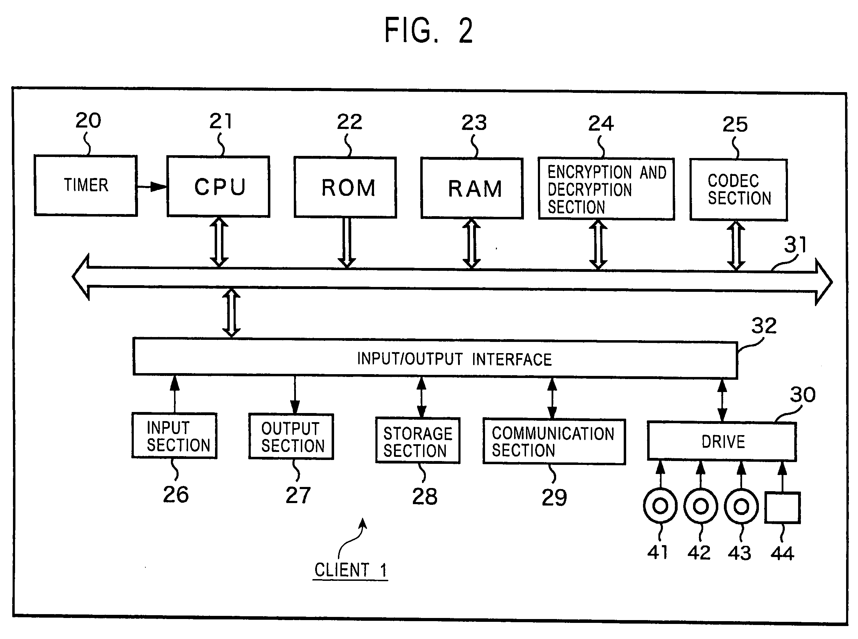

Fig. 2 is a block diagram showing an exemplary hardware structure of a client 1. In Fig. 2, the client 1 is constructed based on, for example, a computer.

A central processing unit (CPU) 21 carries out various types of processing according to a program stored in a read only memory (ROM) 22 or a program loaded from a storage section 28 into a random access memory (RAM) 23. A timer 20 performs clocking to supply the CPU 21 with time information. The RAM 23 also stores, if necessary, data required for the CPU 21 to perform various types of processing.

An encryption and decryption section 24 encrypts content data and decrypts encrypted content data. A Codec section 25 encodes content data by, for example, the adaptive transform acoustic coding (ATRAC) 3 method, and supplies the content data to a semiconductor memory 44 connected to a drive 30 through an input/output interface 32. The Codec section 25 also decodes encoded data read from the semiconductor memory 44 through the drive 30.

The semiconductor memory 44 is defined by, for example, a Memory Stick (TM).

The CPU 21, ROM 22, RAM 23, encryption and decryption section 24, and Codec section 25 are interconnected via a bus 31. The input/output interface 32 is also connected to the bus 31.

An input section 26 including, for example, a keyboard and a mouse; an output section 27 including, for example, a display such as a liquid crystal display (LCD) and a cathode ray tube (CRT) and a speaker; a storage section 28 including, for example, a hard disk; and a communication section 29 including, for example, a modem and a terminal adaptor are connected to the input/output interface 32. The communication section 29 performs communication processing via the Internet 2. The communication section 29 also performs communication processing of an analog signal or a digital signal with other clients.

The drive 30 is connected to the input/output interface 32 as required. A magnetic disk 41, an optical disk 42, a magneto-optical disk 43, or a semiconductor memory 44 is mounted on the input/output interface 32 as required. A computer program read from these components is installed in the storage section 28 as required.

Although not shown in the figure, the content server 3, license server 4, and billing server 5 are also realized by a computer with a structure basically the same as that of the client 1 shown in Fig. 2. In the following description, the structure in Fig. 2 is referred to for the structure of the content server 3, license server 4, or billing server 5.

Here, the computer in Fig. 2 functions as the client 1, content server 3, license server 4, or billing server 5 by the CPU 21 performing various types of program.

In this case, a program can be prerecorded in the ROM 22 or in the storage section 28 as a recording medium incorporated in the computer in Fig. 2.

Alternatively, a program can be stored (recorded) temporarily or permanently in a removable recording medium such as the magnetic disk 41, optical disk 42, magneto-optical disk 43, or semiconductor memory 44 so that it can be supplied as packaged software.

In addition to the installation from the removable recording media described above in the computer in Fig. 2, a program can be installed in the computer in Fig. 2 by transferring the program from a download site to the computer in Fig. 2 wirelessly through an artificial satellite for digital satellite broadcasting or with wires through a network such as a local area network (LAN) or the Internet 2.

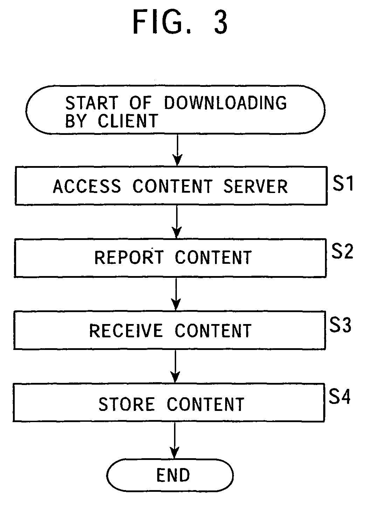

Next, downloading performed by the client 1 which is to be provided with content from the content server 3 will now be described with reference to the flowchart in Fig. 3.

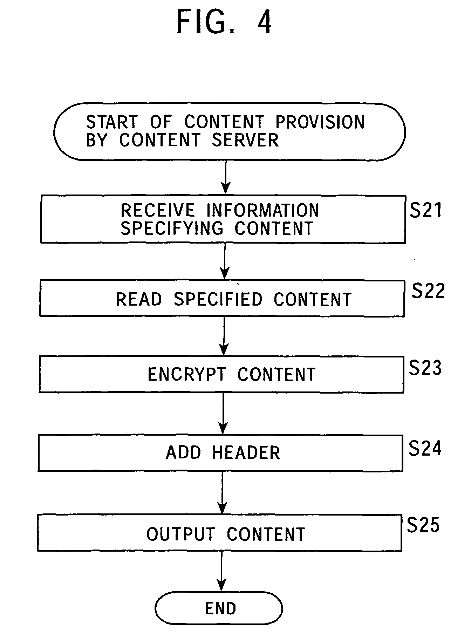

When access to the content server 3 is specified by the user operating the input section 26, the CPU 21, in step S1, controls the communication section 29 to enable the user to access the content server 3 through the Internet 2, and proceeds to step S2. When the user, in step S2, operates the input section 26 to specify the content to be supplied, the CPU 21 receives this specification information, informs the content server 3 of the specified content from the communication section 29 through the Internet 2, and proceeds to step S3. As described below with reference to the flowchart in Fig. 4, because the content server 3 informed by the client 1 sends encrypted content data, the CPU 21, in step S3, receives this content data via the communication section 29, and proceeds to step S4. In step S4, the CPU 21 stores encrypted content data that has been received at step S3 into the storage section 28. The content data is supplied to, for example, a hard disk to store it, and downloading is completed.

Content provided by the content server 3 includes any data such as an image (moving image, static image), audio, computer graphics, computer program, text, metadata, and other additional information.

Content provision performed by the content server 3 in response to downloading by the client 1 in Fig. 3 will now be described with reference to the flowchart in Fig. 4. In the following description, the structure of the client 1 in Fig. 2 is referred to for the structure of the content server 3.

The CPU 21 of the content server 3 waits until accessed by the client 1 from the Internet 2 via the communication section 29. Once the CPU 21 is accessed, it starts providing content.

More specifically, for content provision, in step S21, the CPU 21 of the content server 3 starts by acquiring (receiving) specification information indicating content from the client 1, and proceeds to step S22. This specification information is reported by the client 1 to the content server 3 in step S2 in Fig. 3.

In step S22, the CPU 21 of the content server 3 reads from among the content data stored in the storage section 28 the content specified with the specification information acquired in the processing at step S21, and proceeds to step S23. In step S23, the CPU 21 supplies the encryption and decryption section 24 with the content data read from the storage section 28, and encrypts the content data using a predetermined content key K_{c}.

The content data stored in the storage section 28 has been encoded by the Codec section 25 by means of the ATRAC 3 method, and thus this encoded content data is encrypted.

Of course, it is possible to store content data as pre-encrypted into the storage section 28. In this case, the processing in step S23 can be omitted.

Next, the flow proceeds from step S23 to step S24, and the CPU 21 of the content server 3 adds header information to the encrypted content data, constructs content data with header information, and proceeds to step S25. In step S25, the CPU 21 of the content server 3 sends the content data with header information constructed in step S24 to the client 1 that has accessed from the communication section 29 via the Internet 2, and ends content provision.

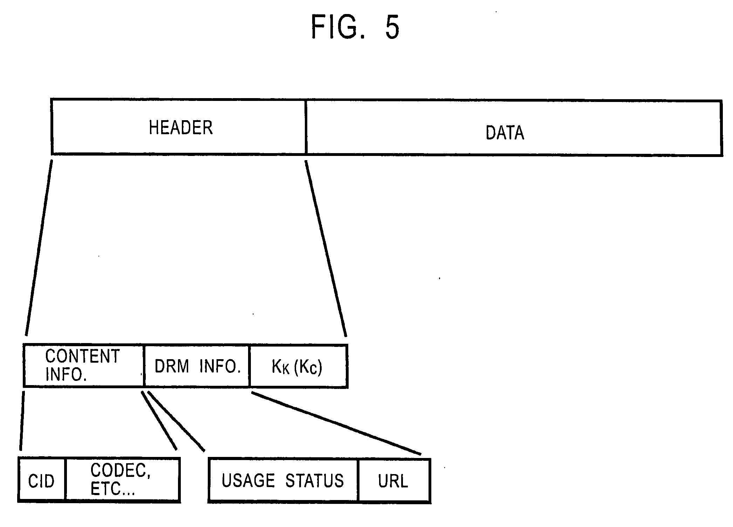

Fig. 5 shows the format of the content data with header information to be supplied (sent) in the content provision in Fig. 4 from the content server 3 to the client 1. The content data with header information includes a header section (Header) and a data section (Data).

Header information is contained in the header section, and encrypted content is contained in the data section.

The header information includes content information, digital rights management (DRM) information, and an encryption key K_{K} (K_{c}).

Information such as a content ID (CID) functioning as identification information for identifying the content (data) contained in the data section and the Codec method of the content are included in the content information.

A usage status of content and a Uniform Resource Locator (URL) are contained in the digital rights management information. For example, the number of playbacks of the content and the number of copies are described as usage statuses of the content in the digital rights management information. Therefore, the number of playbacks as a usage status is, for example, 0 immediately after the content is downloaded into the client 1, and it is incremented thereafter each time the content is played back in the client 1. The URL in the digital rights management information is address information accessed to obtain a license required to use the content contained in the data section, and includes, for example, the host name of the license server 4 in Fig. 1.

The encryption key K_{K} (K_{c}) is an encrypted content key K_{c} for decrypting content contained in the data section. Hence, an encryption key K_{K} (K_{c}) can be decrypted to obtain a content key K_{c}, and furthermore the content can be viewed by decrypting content contained in the data section using the content key K_{c}.

In the content provision system in Fig. 1, the client 1 is free to obtain content from the content server 3 for free. Therefore, a large amount of content is distributed. To use the acquired content, however, the client 1 needs to have a license to use the content.

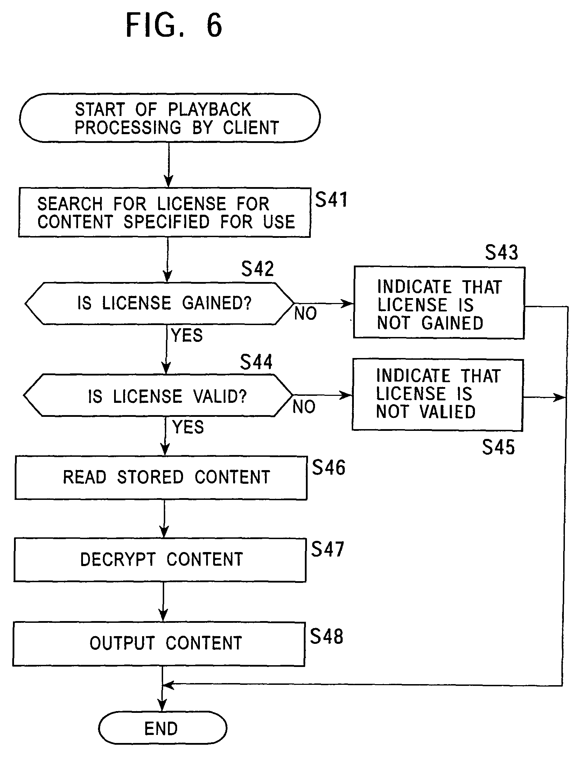

Playback processing performed when the client 1 plays back content will now be described with reference to the flowchart in Fig. 6.

Playback is initiated, for example, when the user operates the input section 26 to specify the content to be viewed from among the content stored in the storage section 28 as a result of downloading in Fig. 3.

For playback, in step S41, the CPU 21 of the client 1 acquires a content ID of the content specified by the user operating the input section 26. Here, the content ID includes, for example, the title of the content and a number assigned to each piece of content. Here, the content ID must be unique.

Furthermore, in step S41, the CPU 21 searches, for example, the storage section 28 for (the data of) a license required to use the content specified by the user, and then proceeds to step S42. In other words, as described below, when the CPU 21 of the client 1 obtains (purchases) a license from the license server 4, it stores (the data of) the license in the storage section 28. Thus, in step S41, the CPU 21 searches the storage section 28 for a license required to use the content specified by the user. As described below, the license includes a content ID of the content that can be used with the license, and therefore the CPU 21, in step S41, searches the storage section 28 for a license including a content ID identical to the content ID of the content specified by the user.

Then, in step S42, the CPU 21 determines whether or not a license required to use the content specified by the user has been obtained, that is, whether or not a license required to use the content specified by the user has been detected as a result of searching in step S41. In step S42, when a determination is made that a license required to use the content specified by the user has not been obtained, that is, a license including the content ID of the content specified by the user is not stored in the storage section 28, the flow proceeds to step S43, where the CPU 21 displays on the display of the output section 27, for example, a message indicating that a license required to use the content is not available and then ends the playback processing.

As a result, in this case, the content is not played back, and accordingly the user of the client 1 cannot view the content.

On the other hand, in step S42, when a determination is made that a license has been obtained, that is, a license including the content ID of the content specified by the user is stored in the storage section 28, the flow proceeds to step S44, where the CPU 21 of the client 1 determines whether or not the license is valid.

In step S44, when a determination is made that the license stored in the storage section 28 is not valid, for example, when the license stored in the storage section 28 allows playback of the content for a limited period of time, and the current date and time indicated by the timer 20 is not within the period of time specified by the license, the flow proceeds to step S45, where the CPU 21 displays, for example, a message indicating that the license is not valid on the display of the output section 27, and ends the playback processing.

As a result, in this case also, the content is not played back, and accordingly the user of the client 1 cannot view the content.

On the other hand, in step S44, when a determination is made that the license stored in the storage section 28 is valid, the flow proceeds to step S46, where the CPU 21 reads the content specified by the user from the storage section 28, stores it in the RAM 23, and proceeds to step S47. In step S47, the CPU 21 decrypts the encryption key K_{K} (K_{c}) in the header section of the content stored in the RAM 23 to a content key K_{c} in a so-called plain text form based on the license of the content. Furthermore, in step S47, the CPU 21 supplies the encryption and decryption section 24 with the decrypted content key K_{c} and the content stored in the RAM 23 to decrypt the content using the content key K_{c}.

Then, the flow proceeds from step S47 to step S48, where the CPU 21 supplies the content data decrypted by the encryption and decryption section 24 to the output section 27 via the input/output interface 32 to display the content on the display or output the content from the speaker, and ends the playback processing.

According to the playback processing in Fig. 6, if the client 1 does not hold a license for the content or if a license held by the client 1 is not valid, the content is not played back. In this case, to play back the content, the client 1 needs to obtain a license.

For this purpose, the client 1 carries out license acquisition where a license is obtained (purchased) from the license server 4 according to, for example, the specification (operation) by the user.

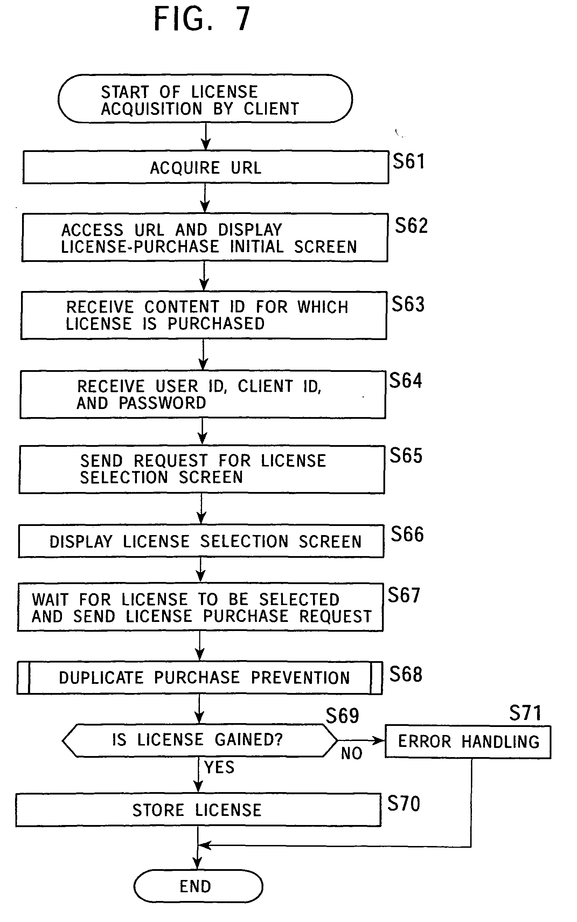

A first embodiment for license acquisition by the client 1 will now be described with reference to the flowchart in Fig. 7.

Here, it is presumed that the client 1 has already acquired a user ID, a client ID, and a password by pre-registration in the license server 4. The user ID is used to identify the user of the client 1. The user ID may be unique, for example, for each user or may be any name specified by the user, such as a handle name. The client ID is used to identify the client 1, and should be, for example, unique here. As a unique client ID, for example, the serial number of the apparatus as the client 1 or the media access control (MAC) address can be employed. In addition, for example, a unique string (including numeric letters and symbols) may be issued as a client ID in the license server 4. If the client 1 is a personal computer, the user ID and client ID can be stored, for example, in the registry of the personal computer.

In the license acquisition, when the user attempts to select content for which a license should be obtained from among the content stored, for example, in the storage section 28, the CPU 21 of the client 1, in step S61, obtains the URL in the header section (Fig. 5) of the content selected by the user, and proceeds to step S62. As described above, this URL represents the address to be accessed when a license required to use content in the data section is to be obtained. In step S62, the CPU 21 accesses the URL obtained in step S61. More specifically, the communication section 29 accesses the license server 4 via the Internet 2. In this case, the license server 4 sends to the client 1 the license-purchase initial screen that requests a user ID, a client ID, and a password to be entered. Then, the CPU 21 receives the license-purchase initial screen, and displays it on the display of the output section 27. The user operates the input section 26 to enter a user ID, a client ID, and a password onto the license-purchase initial screen. The user ID, client ID, and password described above are those that were obtained in advance by the user of the client 1 accessing the license server 4 via the Internet 2.

As described above, the CPU 21 waits for the user to enter a user ID, a client ID, and a password, proceeds from step S62 to step S63, obtains the content ID of the content selected by the user upon the start of the license acquisition, and proceeds to step S64. In step S64, the CPU 21 obtains the user ID, client ID, and password entered by the user on the license-purchase initial screen, and proceeds to step S65. In step S65, the CPU 21 controls the communication section 29 to put the content ID acquired at step S63 and the user ID, client ID, and password acquired at step S64 into the message requesting the license selection screen for selecting a license to be purchased, and sends the message to the license server 4 via the Internet 2.

As described below, the license server 4 that has received the message requesting the license selection screen sends the license selection screen to the client 1 via the Internet 2, and then the CPU 21 of the client 1 waits for the license selection screen to be sent from the license server 4, proceeds from step S65 to step S66, and receives and displays the license selection screen.

Then, the flow proceeds from step S66 to step S67, where the CPU 21 waits for the user to select the license to be purchased on the license selection screen by operating the input section 26 and to request the purchase of the license, puts the content ID of the content to be used by purchasing the license (content ID of the content selected by the user upon the start of license acquisition) into the message requesting the purchase of the license, and sends the message to the license server 4 via the Internet 2.

Thereafter, the flow proceeds from step S67 to step S68, where the CPU 21 performs duplicate-purchase prevention to prevent the user from purchasing a duplicate license. Details of duplicate-purchase prevention in step S68 are described below.

When the license server 4 receives the message requesting the purchase of the license sent by the client 1 in step S67, the license server 4 sends the license to the client 1 via the Internet 2, unless there is, for example, a problem with the user of the client 1. Here, the CPU 21 of the client 1 proceeds from step S68 to step S69, and determines whether or not the license has been sent from the license server 4. In step S69, when a determination is made that the license has been sent, the flow proceeds to step S70, where the client 1 receives the license, supplies the license to the storage section 28 to store the license, and ends license acquisition. In this case, the license was obtained in the client 1, and therefore the content requiring the license can be used within the restrictions specified by the license.

On the other hand, in step S69, when a determination is made that the license has not been sent from the license server 4, the flow proceeds to step S71, where the CPU 21 performs error handling; more specifically, the CPU 21 displays a message indicating that, for example, a license was not obtained, and ends license acquisition. In this case, the client 1 was not able to obtain a license, and therefore the content requiring the license cannot be used.

In the client 1, it is possible to acquire a license for content from the license server 4 before the content is acquired from the content server 3.

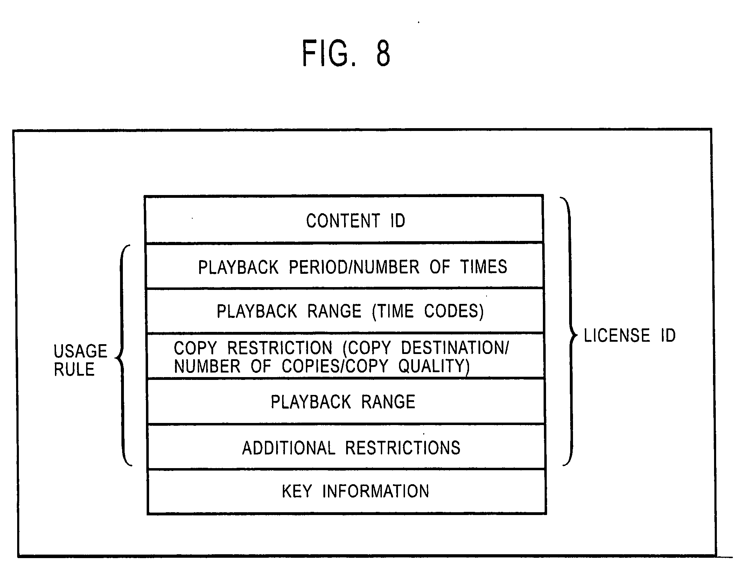

Fig. 8 is an illustration showing data of a license which is under the control of the license server 4 and provided (sold) to the client 1.

In Fig. 8, the license includes the content ID of content which can be used by the license, a usage rule indicating restrictions or range within which the content can be used by the license, and key information required for decrypting the encryption key K_{K} (K_{c}) (Fig. 5) of the content that can be used by the license.

Here, the license includes at least one content ID. In short, one license is given for one piece of content, one license is given for two or more pieces of content, or two or more licenses are given for one piece of content. If one license is given for one piece of content, the license contains the content ID of the corresponding one piece of content. When a plurality of licenses are given for one piece of content, that is, a plurality of licenses are required to use one piece of content, each of the licenses contains the content ID of the corresponding one piece of content. Furthermore, when one license is given for two or more pieces of content, that is, one license is sufficient to use two or more pieces of content, the one license contains the content ID for each of the corresponding two or more pieces of content.

Various restrictions on the use of content with a license are described in the usage rule. In the license shown in Fig. 8, six items: the playback period/number of times, playback range, copy restriction, playback region, and additional restrictions are provided as the usage rule.

The playback period/number of times item specifies the period of time for which the content can be used (may be a period of time specified by an absolute date/time or may be a period of time relative to a reference date/time such as the date/time when the license was obtained) and the number of times the content can be used.

The playback range specifies an available portion (range) of content by, for example, time codes accompanying the content. In a license restricting the playback range to a range of time codes, only the portion of the content specified by the playback range can be used. Consequently, in this case, to use the entire content requires obtaining a plurality of licenses so that the viewable range covers the entire content. This is a case where a plurality of licenses is required to use one piece of content.

The copy restriction specifies a restriction as to copying of the content (checkout). Restrictions regarding copying include restrictions on, for example, the copy destination, a number of copies, and copy quality. The copy destination specifies a copy destination device to which copying of the content is allowed or prohibited. The number of copies specifies the number of times copying is allowed. When the copy destination has a number of copies of 0, the content cannot be copied. The copy quality specifies the quality with which content is copied. As the content quality, the quality with which content is copied by, for example, either analog output or digital output can be employed.

Here, the copy destination device includes, for example, an internal hard disk (HDD), a portable device, a portable medium, an iLink (Institute of Electrical and Electronics Engineers, i.e., IEEE 1394) device, a home network, an analog output, a digital output, and a universal serial bus (USB). An internal HDD, an analog output, and a USB are nonsecured. A portable device, a portable medium, an iLink device, a home network, and a digital output may be nonsecured or secured. As a secured portable device, for example, a net-MD (Mini Disc)(TM) player is available. As a nonsecured portable device, for example, an MP3 (Moving Picture Experts Group, i.e., MPEG-1 Audio Layer 3) player is available. As a secured portable media, for example, a net-MD is available, while as a nonsecured portable medium, for example, a compact disc recordable (CD-R) is available. Furthermore, as a secured iLink device, for example, digital transmission content protection (DTCP) is available. As a digital output, for example, a digital visual interface (DVI) is available, and as a nonsecured DVI, for example, an optical audio output is available.

The playback region specifies a region such as a country where the content can be used.

The additional restrictions specify other restrictions on the use of the content. For the additional restrictions, for example, the number of viewers allowed to view the content simultaneously (e.g., only one viewer is allowed, or a predetermined number of viewers are allowed to view the content simultaneously) and the time slot during which the content can be used (e.g., the content can be used only during a certain time slot in the day) can be specified.

In the license shown in Fig. 8, for example, the content ID and the usage rule define a unique license ID that identifies the license. Thus, if the content IDs and usage rules of any two licenses are identical, the two licenses are identical. A license is allowed to contain a unique license ID for each different content ID and usage rule.

As described above, since the usage rule can describe various restrictions on the use of content depending on licenses, various duplicates may occur among licenses.

In the first place, license duplication may occur among licenses containing the same content ID. In other words, when the content ID contained in a license differs from the content ID contained in another license, the two licenses are required to use different content, and therefore license duplication does not occur. Therefore, license duplication occurs only when two licenses contain the same content ID.

Furthermore, license duplication comes in various forms.

More specifically, license duplication is broadly classified into a case where licenses are completely duplicated and a case where licenses are partially duplicated.

Two licenses are completely duplicated when the two licenses have the same usage rules.

Two licenses are partially duplicated when the two licenses share a usage rule item or share a portion of a usage rule item.

More specifically, two licenses sharing a usage rule item are represented by an example where two licenses L1 and L2 are not duplicated completely but, for example, the item "playback period/number of times" of the usage rule for the license L1 specifies the period of time for which the content can be played back as "one year from January 1, 2003", while the item "playback period/number of times" of the usage rule for the license L2 also specifies the period of time for which the content can be played back as "one year from January 1, 2003".

Two licenses sharing a portion of a usage rule item are represented by an example where two licenses L1 and L2 are not duplicated completely but, for example, the item "playback period/number of times" of the usage rule for the license L1 specifies the period of time for which the content can be played back as "one year from January 1, 2003", while the item "playback period/number of times" of the usage rule for the license L2 specifies the period of time for which the content can be played back as "one year from July 1, 2003". In this case, the licenses L1 and L2 are duplicated in that they both allow the content to be played back for the period of time from July 1, 2003 to December 31, 2003.

Furthermore, a case where, for example, the region in which the content can be played back is specified as "Japan" in the item "playback region" of the usage rule for the license L1 and the region in which the content can be played back is specified as "Asia" in the item "playback region" of the usage rule for the license L2 is also regarded as the licenses L1 and L2 being duplicated as to a portion of a usage rule item. More specifically, in this case, the licenses L1 and L2 are duplicated in that they both allow the content to be played back in the region of Japan. In this case, however, the period of time for which the content is played back is presumed to be free from restriction for convenience of explanation.

When license acquisition described with reference to Fig. 7 is performed in the client 1, duplicate-purchase prevention is carried out at step S68 to prevent the user of the client 1 from purchasing a duplicate license.

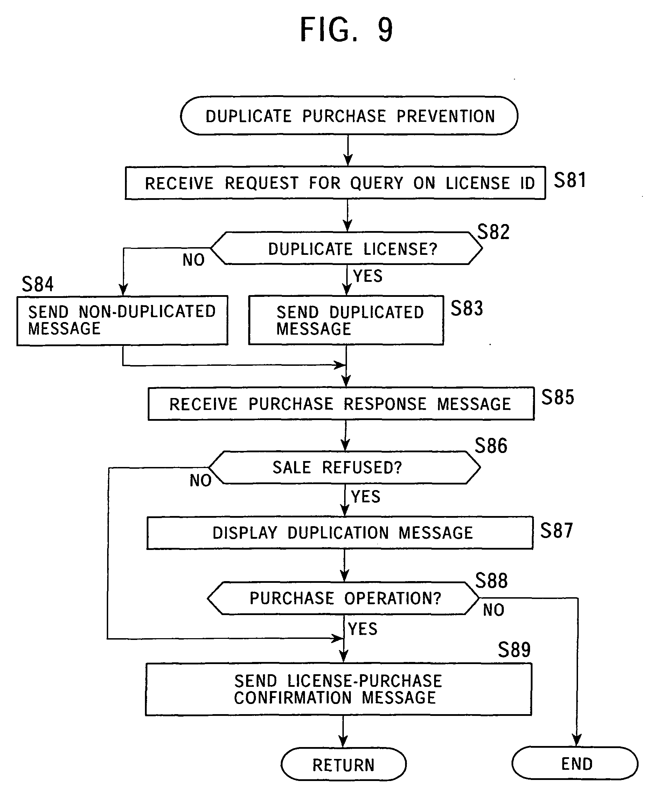

Duplicate-purchase prevention carried out at step S68 in Fig. 7 will now be described with reference to the flowchart in Fig. 9.

In duplicate-purchase prevention in Fig. 9, a query request message for the license ID sent from the license server 4 via the Internet 2 (hereinafter, referred to as a license-ID query request message as required) is received at step S81.

More specifically, when the client 1 purchases a license, as described above, in step S67 in Fig. 7, the client 1 puts the content ID of the content to be used with the license into a message requesting the purchase of a license (hereinafter, referred to as a license-purchase request message as required), and sends the message to the license server 4. In this case, the license server 4 receiving this license-purchase request message puts the license ID of the license requested with the license-purchase request message into the license-ID query request message requesting the query of the license ID, and sends the message to the client 1, as described below. In step S81, the client 1 receives the license-ID query request message sent from the license server 4 in this manner.

Thereafter, the flow proceeds from step S81 to step S82, where the client 1 determines whether or not there is a license which duplicates the license with the license ID contained in the license-ID query request message according to the license-ID query request message.

In short, when the client 1 purchases a license, as described above, in step S70 in Fig. 7, it stores the purchased license into the license storage section 28. In step S82, the client 1 determines whether or not there is a license which duplicates the license with the license ID contained in the license-ID query request message, depending on whether or not a license which duplicates the license with the license ID contained in the license-ID query request message is stored in the storage section 28.

Here, as described above, the license ID includes a content ID of the content used with the license and a usage rule functioning as restrictions on the use of the content. Therefore, a determination as to whether or not there is a license which duplicates the license with the license ID contained in the license-ID query request message is made as follows. That is, a search is made from among the licenses stored in the storage section 28 for a license having the license ID including the content ID identical to the content ID constituting the license ID contained in the license-ID query request message, and if such a license is found, the usage rule of the found license is compared with the usage rule constituting the license ID contained in the license-ID query request message.

In step S82, if a determination is made that there is a license which duplicates the license with the license ID contained in the license-ID query request message, that is, if a license which duplicates the license with the license ID contained in the license-ID query request message is stored in the storage section 28, the flow proceeds to step S83, where the client 1 sends a message indicating that the license to be purchased duplicates a license already available (hereinafter, referred to as a duplicated message as required) to the license server 4 via the Internet 2, and the flow proceeds to step S85.

Also, in step S82, if a determination is made that there is not a license which duplicates the license with the license ID contained in the license-ID query request message, that is, if a license which duplicates the license with the license ID contained in the license-ID query request message is not stored in the storage section 28, the flow proceeds to step S84, where the client 1 sends a message indicating that the license to be purchased does not duplicate a license already available (hereinafter, referred to as a non-duplicated message as required) to the license server 4 via the Internet 2, and the flow proceeds to step S85.

In step S85, the client 1 waits for a purchase response message to be sent from the license server 4 via the Internet 2, receives the purchase response message, and then proceeds to step S86.

Here, as described below, when the license server 4 receives from the client 1 a license-purchase request message, it returns a purchase response message, as a response to the license-purchase request message, indicating refusal or permission to sell the license to the client 1 that has sent the license-purchase request message. In step S85, the purchase response message sent from the license server 4 in this manner is received.

In step S86, the client 1 determines whether or not the purchase response message received in step S85 indicates refusal to sell the license. In step S86, if a determination is made that the purchase response message does not indicate refusal to sell the license, that is, if the purchase response message indicates permission to sell the license, the flow skips step S87 and step S88 to step S89, where the client 1 sends a license-purchase confirmation message confirming the purchase of the license requested with the license-purchase request message in step S67 in Fig. 7 to the license server 4 via the Internet 2, and returns.

The license server 4 that has received the license-purchase confirmation message sends the license requested by the client 1 with the license-purchase request message in step S67 in Fig. 7 as described below, and the client 1 receives the license in step S70 in Fig. 7 as described above.

On the other hand, in step S86, if a determination is made that the purchase response message from the license server 4 received by the client 1 in step S85 indicates refusal to sell the license, the flow proceeds to step S87, where the client 1 displays a duplication message indicating that the license to be purchased duplicates a license already available on the display of the output section 27 (Fig. 2).

More specifically, as described above, if the client 1 holds a license which duplicates the license having the license ID contained in the license-ID query request message, the client 1, in step S83, sends a duplicated message to the license server 4, and if the client 1 does not hold a license which duplicates the license having the license ID contained in the license-ID query request message, the client 1, in step S84, sends a non-duplicated message to the license server 4. Then, if the license server 4, as described below, receives a duplicated message from the client 1, the license server 4 sends a purchase response message indicating refusal to sell the license to the client 1, and if the license server 4 receives a non-duplicated message from the client 1, it sends a purchase response message indicating permission to sell the license to the client 1.

Therefore, if the purchase response message indicates refusal to sell the license, it means that the license to be purchased by the client 1 duplicates a license already available, and therefore the client 1, in step S87, displays a duplication message indicating that the license is duplicated, and thereby, informs the user of the client 1 that he or she is attempting to purchase a duplicate license.

After the client 1 displays a duplication message in step S87, the flow proceeds to step S88, where a determination is made as to whether or not the user has performed an operation to purchase the license requested with the license-purchase request message (hereinafter, referred to as a purchase operation as required).

In step S88, if a determination is made that the purchase operation has not been performed, that is, in step S87, if the user informed that he or she is attempting to purchase a duplicate license cancels the purchase of the license requested with the license-purchase request message, duplicate-purchase prevention in Fig. 9 ends, and license acquisition in Fig. 7 also ends.

Therefore, in this case, the purchase of the license requested first by the user with the license-purchase request message is not performed, and therefore the user is prevented from purchasing a duplicate license.

On the other hand, in step S88, when a determination is made that the purchase operation has been performed, that is, in step S87, despite the fact that the user was informed of his/her attempt to purchase a duplicate license, the user has performed the purchase operation to purchase a duplicate license, and thereby it is confirmed that the user wishes to purchase a duplicate license, the flow proceeds to step S89, where, as described above, the client 1 sends a license-purchase confirmation message confirming the purchase of the license requested with the license-purchase request message to the license server 4 via the Internet 2, and returns.

In this case, the license server 4 that has received the license-purchase confirmation message sends the license requested by the client 1 with the license-purchase request message as described below, and the client 1 receives the license in step S70 in Fig. 7 as described above. More specifically, in this case, the user purchases a license which duplicates another license already available. In this case, however, even though the user is informed of his/her attempt to purchase a duplicate license, the user purchases the duplicate license. This does not cause a problem.

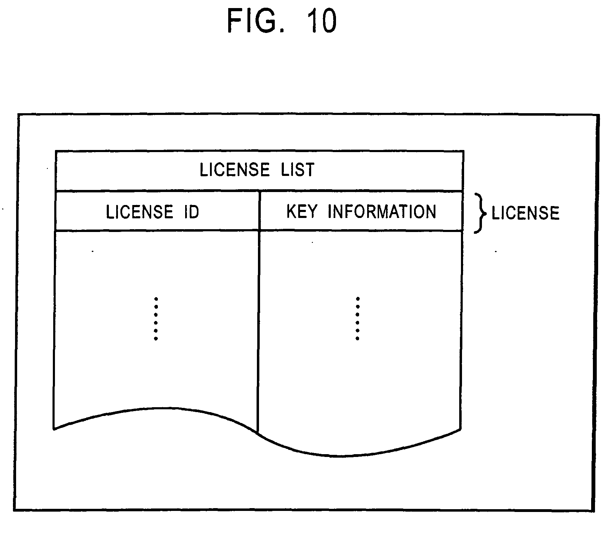

Fig. 10 illustrates content in the storage section 28 (Fig. 2) of the client 1 where a license is stored in step S70 of Fig. 7.

The license list which lists licenses is stored in the storage section 28 of the client 1, and the licenses purchased in the client 1 are registered in the license list.

In step S82 of Fig. 9, a determination as to whether or not there is a license which duplicates the license with the license ID contained in the license-ID query request message is made as follows. That is, a search is made from among the license list for a license having the license ID including the content ID identical to the content ID constituting the license ID contained in the license-ID query request message, and if such a license is found, the usage rule of the found license is compared with the usage rule constituting the license ID contained in the license-ID query request message.

More specifically, if a license having the license ID including the content ID identical to the content ID constituting the license ID contained in the license-ID query request message could not be found from among the license list, the client 1 is determined not to hold a duplicate license. In addition, even if a license having the license ID including the content ID identical to the content ID constituting the license ID contained in the license-ID query request message is found from among the license list, if the usage rule of the found license and the usage rule constituting the license ID contained in the license-ID query request message do not share any item or any portion of an item, the client 1 is determined not to hold a duplicate license.

On the other hand, if a license having the license ID including the content ID identical to the content ID constituting the license ID contained in the license-ID query request message is found from among the license list and if the usage rule of the found license and the usage rule constituting the license ID contained in the license-ID query request message share any item or any portion of an item, the client 1 is determined to hold a duplicate license.

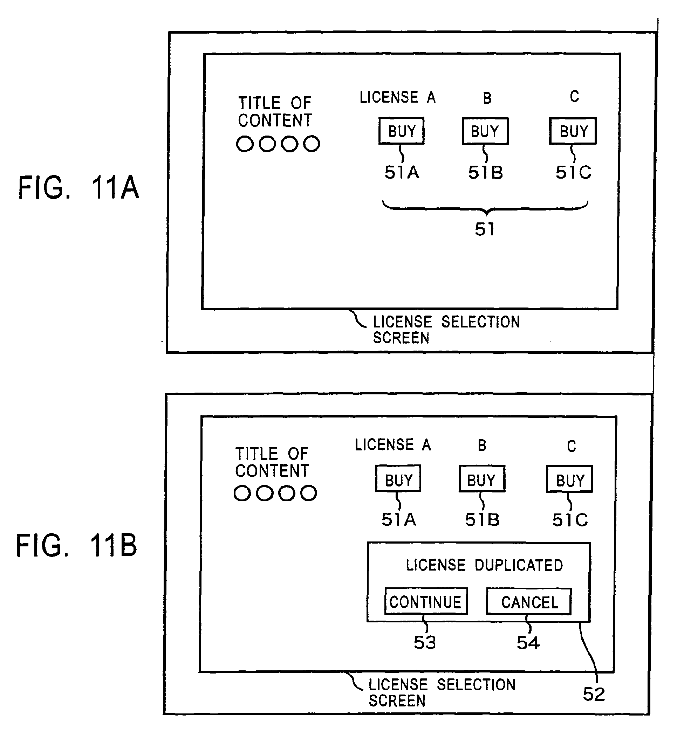

Figs. 11A and 11B are illustrations showing a license selection screen displayed in the client 1 in step S66 of Fig. 7.

On the license selection screen, for example, the title of the content is displayed as information representing the content that can be used by a license, as shown in Fig. 11A, as well as purchase buttons 51 operated to purchase one or more types of license required to use the content.

Here, on the license selection screen in Fig. 11A, buttons 51A, 51B, and 51C operated to purchase licenses A, B, and C, respectively, are provided as the purchase buttons 51. The licenses A to C are licenses required to use the same content, but have different usage rules. More specifically, for example, the license A allows only playback of content, the license B allows one copy of the content in addition to playback of content, and the license C allows the content to be used freely as if it is purchased (i.e., any form of usage of the content is allowed). The licenses A to C are licenses required to use the same content, but have different restrictions on the use of the content. Therefore, the licenses A to C differ in price.

Here, although three types of licenses A to C are presumed to exist for certain content, the number of types of license for one piece of content is not limited to three, but may be one or two, or four or more.

In the client 1, in step S66 in Fig. 7, the license selection screen shown in Fig. 11A is displayed. Then, when a license to be purchased is selected by the user operating a purchase button 51 (any of the buttons 51A to 51C in Fig. 11A) on the license selection screen, a license purchase message requesting the purchase of the license is sent from the client 1 to the license server 4, as described above, in step S67 in Fig. 7.

Thereafter, in the client 1, duplicate-purchase prevention is performed in step S68 in Fig. 7. In step S85 of the duplicate-purchase prevention (Fig. 9), when the client 1 receives the purchase response message indicating that the selling of the license is refused from the license server 4, a duplication message indicating that the license to be purchased duplicates a license already available is displayed as a dialog 52, for example, on the license selection screen in step S87, as shown in Fig. 11B.

A purchase continue button 53 and a purchase cancel button 54 are provided on the dialog 52. When the user operates the purchase continue button 53, a determination is made that the purchase operation has been performed in step S88 in Fig. 9. On the other hand, when the user operates the purchase cancel button 54, a determination is made that purchase operation has not been performed in step S88 of Fig. 9.

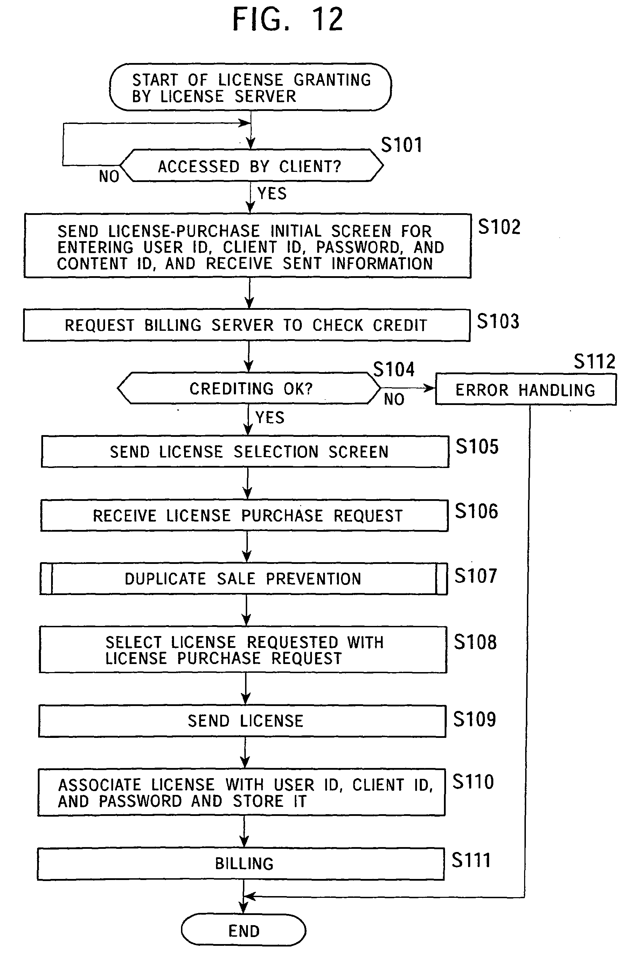

License granting carried out by the license server 4 in response to the license acquisition in Fig. 7 carried out by the client 1 will now be described with reference to the flowchart in Fig. 12. As described above, the hardware structure in Fig. 2 is referred to for the structure of the license server 4.

The CPU 21 of the license server 4 waits until accessed by the client 1 in step S101. When the CPU 21 is accessed, it proceeds to step S102, sends the license-purchase initial screen to the client 1 that has made an access, and receives (acquires), via the communication section 29, a message requesting the license selection screen (hereinafter, referred to as a license-selection-screen request message as required), the message containing the user ID, client ID, password, and content ID sent by the client 1 in step S65 of Fig. 7 in response to the license-purchase initial screen.

Then, the CPU 21 of the license server 4 proceeds from step S102 to step S103, accesses the billing server 5 from the communication section 29, requests credit-checking of the user corresponding to the user ID, client ID, and password received in step S102, and proceeds to step S104. Here, when the billing server 5 receives a request by the license server 4 for credit-checking via the Internet 2, it checks the history of payment by the user corresponding to the user ID, client ID, and password as to whether or not the user has a history of unpaid license fees. If the user does not have such a history, the billing server 5 sends a credit-checking result allowing license granting. If the user has such a history, the billing server 5 sends a credit-checking result denying license granting.

In step S104, the CPU 21 of the license server 4 determines whether or not the credit-checking result from the billing server 5 is to allow license granting. When license granting is allowed, the CPU 21 proceeds to step S105 to construct a license selection screen (Fig. 11A) for selecting a license required to use the content having the content ID contained in the license-selection-screen request message sent from the client 1, and sends the screen to the client 1 via the Internet 2.

As described above, the client 1 that has received the license selection screen sends a license-purchase request message requesting the purchase of the license selected by the user in step S67 of Fig. 7. Thus, the CPU 21 of the license server 4 waits for the license-purchase request message to be sent from the client 1, proceeds from step S105 to step S106 to receive the license-purchase request message, and proceeds to step S107.

In step S107, the CPU 21 of the license server 4 performs duplicate-sale prevention for preventing the sale of a duplicate license in response to the client 1 performing duplicate-purchase prevention in step S68 of Fig. 7. Details of duplicate-sale prevention in step S107 are described later.

After the processing in step S107 has been completed, the flow proceeds to step S108, where the CPU 21 of the license server 4 selects, from among the licenses stored in the storage section 28, a license requested with the license-purchase request message received in step S106, and proceeds to step S109.

More specifically, (data of) the licenses for the content provided by the content server 3 are stored in the storage section 28 in the license server 4, and the license server 4, in step S108, selects from among the licenses stored in the storage section 28 the license requested with the license-purchase request message sent from the client 1, and proceeds to step S109.

In step S109, the CPU 21 of the license server 4 sends the license (Fig. 8) to the client 1 from the communication section 29 via the Internet 2, and proceeds to step S110.

In step S110, the CPU 21 of the license server 4 associates the license ID of the license sent in step S109 with the user ID, client ID, and password contained in the license-selection-screen request message received in step S102, and supplies the data to the storage section 28 to store it. Thus, in the storage section 28, the user ID, client ID, and password identifying the user who has purchased the license are associated with the license ID identifying the license purchased by the user.

Thereafter, the flow proceeds from step S110 to step S111, where the CPU 21 of the license server 4 carries out billing and quits license granting.

Here in step S111, the CPU 21 of the license server 4 requests, from the communication section 29, the billing server 5 to bill the user corresponding to the user ID, client ID, and password contained in the license-selection-screen request message sent from the client 1. In this case, the billing server 5 bills the user according to the billing request from the license server 4. As described above, if the user does not pay in response to this billing, for example, the user will not be able to receive license granting despite requesting a license.

In other words, in this case, a credit-checking result denying license granting is sent from the billing server 5 to the license server 4 and the flow proceeds from step S104 to step S112, where the CPU 21 carries out error handling. More specifically, the CPU 21 of the license server 4 outputs a message indicating that a license cannot be granted to the client 1 that has accessed by controlling the communication section 29, and quits license granting.

In this case, as described above, the client 1 is not capable of obtaining a license, and therefore cannot use (decrypt) the content.

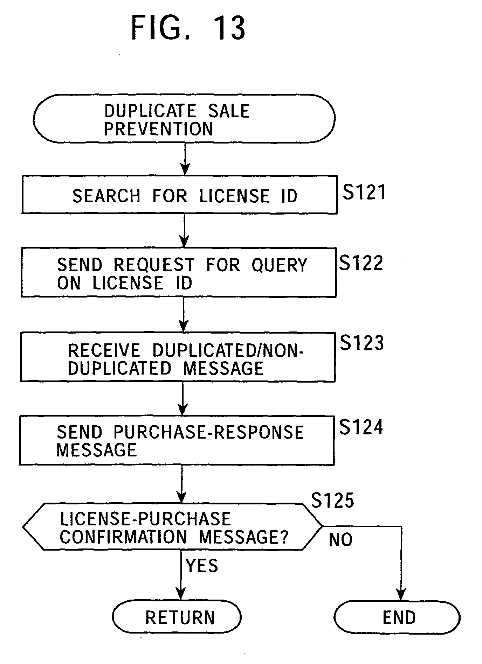

Duplicate-sale prevention carried out by the license server 4 in step S107 of Fig. 12 will now be described with reference to the flowchart in Fig. 13.

In duplicate-sale prevention, the license server 4, first of all in step S121, searches for the license ID of the license requested with the license-purchase request message sent by the client 1 in step S67 of Fig. 7, and proceeds to step S122.

In step S122, the license server 4 sends to the client 1 via the Internet 2 a license-ID query request message requesting the query of the license ID found in step S121, and proceeds to step S123.

In step S123, the license server 4 waits for the client 1 to send a duplicated message or a non-duplicated message in step S83 or step S84 of Fig. 7, receives a duplicated message or a non-duplicated message (hereinafter, referred to as a duplicated/non-duplicated message as required), and proceeds to step S124.

In step S124, the license server 4 sends a purchase response message for permitting or refusing the sale of the license according to the duplicated/non-duplicated message received in step S123. More specifically, if the duplicated/non-duplicated message received in step S123 is a duplicated message, the license server 4 sends a purchase response message indicating refusal to sell the license. On the other hand, if the duplicated/non-duplicated message received in step S123 is a non-duplicated message, the license server 4 sends a purchase response message indicating permission to sell the license.

After the purchase response message has been sent in step S124, the flow proceeds to step S125, where the license server 4 determines whether or not a license-purchase confirmation message has been sent from the client 1.

In step S125, when a determination is made that the license-purchase confirmation message has not been sent from the client 1, the license server 4 quits duplicate-sale prevention in Fig. 13, and license granting in Fig. 12 also ends.

Therefore, in this case, the license requested by the client 1 is not sold by the license server 4 to the client 1.

On the other hand, in step S125, when a determination is made that the license-purchase confirmation message has been sent from the client 1, the license server 4 returns to step S108 in Fig. 12.

Thus, in this case, the license requested by the client 1 is sold by the license server 4 to the client 1.

As described above, a determination is made in the client 1 as to whether or not the license requested from the license server 4 duplicates a license already available in the client 1, and, according to the determination result, the user of the client 1 is informed that a license requested from the license server 4 duplicates a license already available in the client 1. Thus, the user of the client 1 is prevented from purchasing a duplicate license.

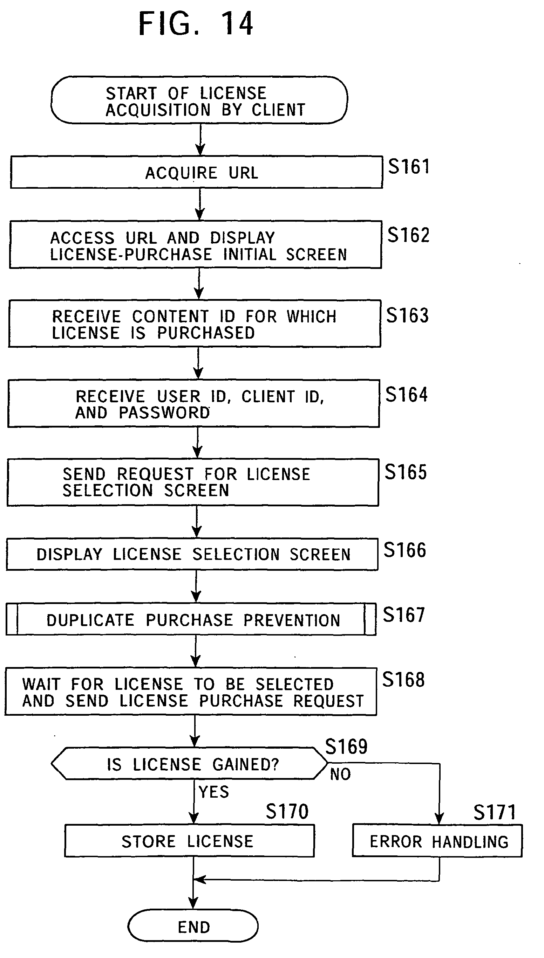

A second embodiment for the client 1 to carry out license acquisition will now be described with reference to the flowchart in Fig. 14.

In the license acquisition in Fig. 7, the user selects a license to be purchased on the license selection screen. In this case, duplicate-purchase prevention for preventing duplicate purchase of a license (step S68 in Fig. 7) is carried out after the license-purchase request message requesting the purchase of the license has been sent from the client 1 to the license server 4 (step S67 n Fig. 7), that is, after a transaction for purchasing the license has been started in the client 1 and license server 4. In Fig. 14, however, duplicate-purchase prevention is carried out before the transaction for purchasing a license is started in the client 1 and license server 4.

From step S161 to step S166 in license acquisition of Fig. 14, the same processing as in step S61 to step S66 of Fig. 7 is carried out.

More specifically, in license acquisition in Fig. 14, when the user, for example, selects content for which a license is to be obtained from among the content stored in the storage section 28, the client 1 obtains the URL in the header section (Fig. 5) of the content selected by the user in step S161 in the same manner as in Fig. 7, and proceeds to step S162. In step S162, the client 1 accesses the URL obtained in step S161, and thereby displays the license-purchase initial screen in the same manner as in step S62 of Fig. 7.

Thereafter, the client 1 waits for the user to enter a user ID, a client ID, and a password on the license-purchase initial screen, proceeds from step S162 to step S163, acquires the content ID of the content that was selected by the user when license acquisition was started, and proceeds to step S164. In step S164, the client 1 acquires the user ID, client ID, and password entered by the user on the license-purchase initial screen, and proceeds to step S165. In step S165, the client 1 puts into the license-selection-screen request message the content ID obtained in step S163 and the user ID, client ID, and password that were obtained in step S164, and then sends the message to the license server 4 via the Internet 2. Thereafter, the client 1 waits for the license selection screen to be sent from the license server 4, proceeds from step S165 to step S166, receives and displays the license selection screen, and proceeds to step S167.

In step S167, the client 1 carries out duplicate-purchase prevention for preventing the user from purchasing a duplicate license. When the client 1 returns from the duplicate-purchase prevention, it proceeds to step S168. Details of duplicate-purchase prevention in step S167 will be described later.

Then, in step S168, the client 1 waits for the user to select the license to be purchased on the license selection screen by operating the input section 26 and to request the purchase of the license, puts the content ID of the content to be used based on the license to be purchased (the content ID of the content selected by the user when license acquisition was started) into the license-purchase request message requesting the purchase of the license, and sends the message to the license server 4 via the Internet 2.

When the license server 4 receives the license-purchase request message sent by the client 1 in step S168, it starts a transaction for selling the license, and sends the license to the client 1 via the Internet 2 if, for example, there is no problem with the user of the client 1. Then, the client 1 proceeds from step S168 to step S169, and thereinafter in step S169 to S171, the same processing as in step S69 to step S71 of Fig. 7 is carried out.

More specifically, in step S169, the client 1 determines whether or not the license has been sent from the license server 4, and when a determination is made that the license has been sent, the flow proceeds to step S170, where the client 1 receives the license, supplies the license to the storage section 28 to store it, and quits license acquisition. In this case, the license has been obtained in the client 1, and therefore the content requiring the license can be used within the restrictions specified by the license.

On the other hand, when a determination is made that a license has not been sent from the license server 4 in step S169, the flow proceeds to step S71, where the client 1 carries out error handling in the same manner as in step S71 in Fig. 7, and quits license acquisition. In this case, a license has not been obtained in the client 1, and therefore the content requiring the license cannot be used.

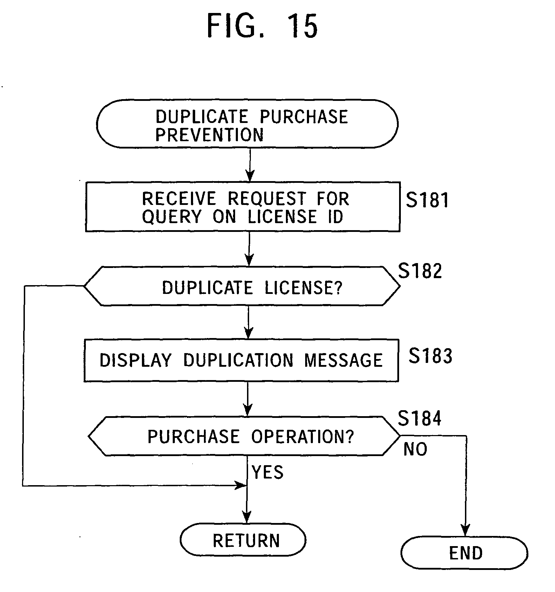

Duplicate-purchase prevention carried out in step S167 of Fig. 14 will now be described with reference to the flowchart in Fig. 15.

In duplicate-purchase prevention in Fig. 15, first of all, the license-ID query request message requesting the query of the license ID sent from the license server 4 via the Internet 2 is received in step S181.

More specifically, the client 1, as described above, in step S165 in Fig. 14, puts into the license-selection-screen request message the content ID of the content to be used based on the license to be purchased, and sends the message to the license server 4. As described below, the license server 4 that has received this license-selection-screen request message puts into the license-ID query request message requesting the query of the license ID the license ID of the license required to use the content with the content ID contained in the license-selection-screen request message, and sends the message to the client 1. In step S181, the client 1 receives the license-ID query request message sent from the license server 4 in this manner.

Here, there may be two or more licenses required to use content with a certain content ID. In this case, the license server 4 sends to the client 1 a license-ID query request message requesting the query of the license ID of each of the licenses.

Thereafter, the flow proceeds from step S181 to step S182, where the client 1, as in step S82 in Fig. 9, determines whether or not there is a license which duplicates the license with the license ID contained in the license-ID query request message according to the license-ID query request message.

As described above, the license-ID query request message sent to the client 1 from the license server 4 may request the query of a plurality of license IDs. In this case, in step S182, a determination is made as to whether or not the client 1 holds a license which duplicates the license with each of the license IDs.

In step S182, when a determination is made that there is no license which duplicates the license with the license ID contained in the license-ID query request message, the flow skips steps S183 and step S184 and returns to step S168 of Fig. 14.

In this case, processing in and after step S168 of Fig. 14 is performed, and in step S170 of Fig. 14, the client 1 basically receives the license sent from the license server 4, and therefore the user can purchase the license.

On the other hand, in step S182, when a determination is made that there is a license which duplicates the license with the license ID contained in the license-ID query request message, the flow proceeds to step S183, where the client 1, as in step S87 of Fig. 9, displays a duplication message indicating that the license to be purchased duplicates a license already available. Thus, the client 1 reports to the user of the client 1 that he or she is attempting to purchase a duplicate license, and then proceeds to step S184.

In step S184, the client 1 determines whether or not the user has performed the purchase operation to purchase the license.

In step S184, when a determination is made that the purchase operation has not been performed, that is, the user informed that he or she is attempting to purchase a duplicate license cancels the purchase of the license in step S183, duplicate-purchase prevention in Fig. 15 ends, and license acquisition in Fig. 14 also ends.

As a result, in this case, a license is not purchased, and therefore the user is prevented from purchasing a duplicate license.

On the other hand, when a determination is made in step S184 that the purchase operation has been performed, that is, the user has performed the purchase operation to express his/her wish to purchase a duplicate license although the user was informed in step S183 that he or she was attempting to purchase a duplicate license, the flow returns to step S168 in Fig. 14.

In this case, processing in and after step S168 of Fig. 14 is performed, and in step S170 of Fig. 14, the client 1 basically receives the license sent from the license server 4. In other words, in this case, the user purchases a license which duplicates an already available license. In this case, however, even though the user is informed of his/her attempt to purchase a duplicate license, the user purchases the duplicate license. Therefore, this does not cause a problem.

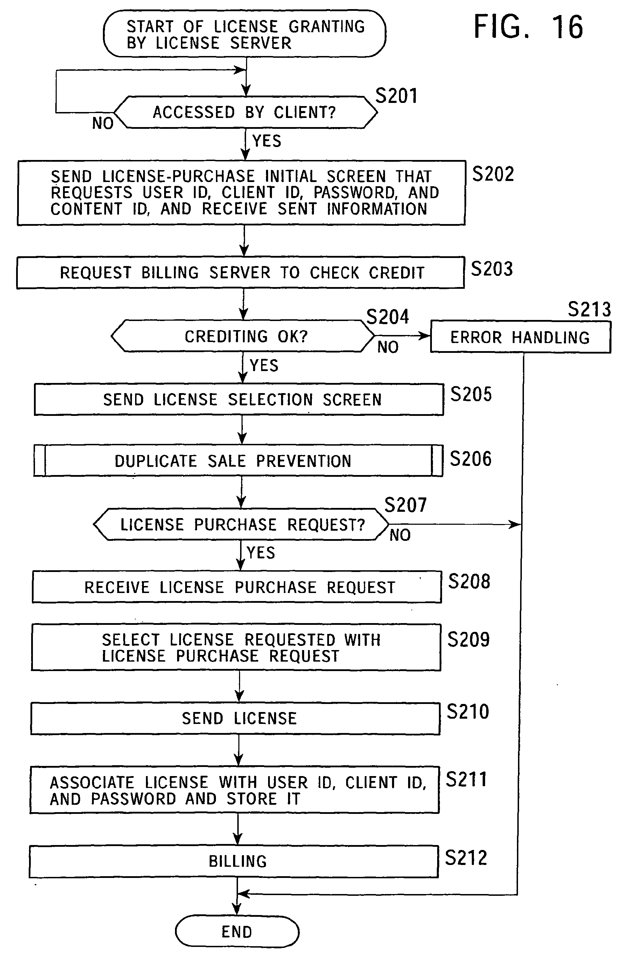

License granting carried out by the license server 4 in response to license acquisition in Fig. 14 carried out by the client 1 will now be described with reference to the flowchart in Fig. 16.

In the license server 4, the same processing as in step S101 to step S105 of Fig. 12 is carried out in step S201 to step S205.

More specifically, the license server 4 waits until accessed by the client 1 in step S201. When the license server 4 is accessed, it proceeds to step S202, sends the license-purchase initial screen to the client 1 that has made an access, and receives a license-selection-screen request message containing the user ID, client ID, password, and content ID sent by the client 1 in step S165 of Fig. 14 in response to the license-purchase initial screen.

Then, the license server 4 proceeds from step S202 to step S203, accesses the billing server 5, requests credit-checking of the user corresponding to the user ID, client ID, and password, and proceeds to step S204.

In step S204, the license server 4 waits for the credit-checking result to be sent from the billing server 5, receives the credit-checking result, and determines whether or not the credit-checking result is to allow license granting. When a determination is made in step S204, from the credit-checking result, that license granting should not be permitted, the flow proceeds to step S213, where error handling is carried out as in step S112 of Fig. 12, and license granting ends.

On the other hand, in step S204, when a determination is made, from the credit-checking result, that license granting should be permitted, the flow proceeds to step S205, where the license server 4 waits for the client 1 to send the license-selection-screen request message in step S165 of Fig. 14, and upon receiving the license-selection-screen request message, constructs a license selection screen (Fig. 11A) for selecting the license required to use the content with the content ID contained in the license-selection-screen request message, and sends the screen to the client 1 via the Internet 2.

Thereafter, the flow proceeds to step S206, where the license server 4 carries out duplicate-sale prevention in response to the duplicate-purchase prevention carried out by the client 1 in step S167 of Fig. 14, and returns from the duplicate-sale prevention to step S207. Details of the duplicate-sale prevention in step S206 will be described later.

In step S207, the license server 4 determines whether or not the license-purchase request message sent by the client 1 in step S168 of Fig. 14 has been sent. In step S207, when a determination is made that the license-purchase request message has not been sent from the client 1, that is, if license acquisition in Fig. 14 ends in the client 1, for example, because duplicate-purchase prevention was performed in step S167 of Fig. 14 to prevent the purchase of a duplicate license, the license server 4 ends license granting.

Also in step S207, when a determination is made that a license-purchase request message has been sent from the client 1, the flow proceeds to step S208, where the license server 4 receives the license-purchase request message, and proceeds to step S209.

In steps S209 to S212, the same processing as in step S108 to step S111 of Fig. 12 is carried out.

More specifically, in step S209, the license server 4 selects, from among the licenses stored in the storage section 28, the license requested with the license-purchase request message received in step S208, and proceeds to step S210. In step S210, the license server 4 sends to the client 1 the license selected from among the licenses stored in the storage section 28, and proceeds to step S211. In step S211, the license server 4 associates the license ID of the license sent in step S210 with the user ID, client ID, and password contained in the license-selection-screen request message received in step S202, supplies the data to the storage section 28 to store it, and proceeds to step S212. In step S212, the license server 4 carries out billing and ends license granting.

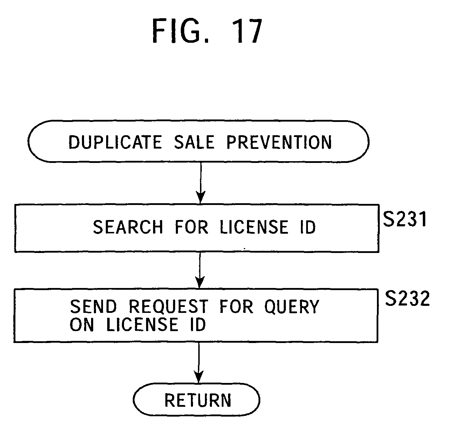

Duplicate-sale prevention carried out by the license server 4 in step S206 of Fig. 16 will now be described with reference the flowchart in Fig. 17.

In duplicate-sale prevention, first of all in step S231, the license server 4 searches for the license ID of the license required to use the content with the content ID contained in the license-selection-screen request message received from the client 1 in step S202 of Fig. 16, that is, the license ID having the content ID contained in the license-selection-screen request message, and then proceeds to step S232.

In step S232, the license server 4 sends to the client 1 the license-ID query request message requesting the query of the license ID searched for in step S231, and returns.

As described above with reference to Figs. 14 to 17, the user of the client 1 is also prevented from purchasing a duplicate license by performing duplicate-purchase prevention and duplicate-sale prevention before a transaction for sales and purchase of the license is started in each of the client 1 and the license server 4.

In the case described above, a determination is made in the client 1 as to whether or not the license requested by the client 1 from the license server 4 duplicates a license already held by the client 1. It is also possible that the license server 4 determines whether or not the license requested by the client 1 from the license server 4 duplicates a license already held by the client 1 and that the client 1 is informed of the fact that the license requested by the client 1 from the license server 4 duplicates a license already held by the client 1 according to the determination result by the license server 4.

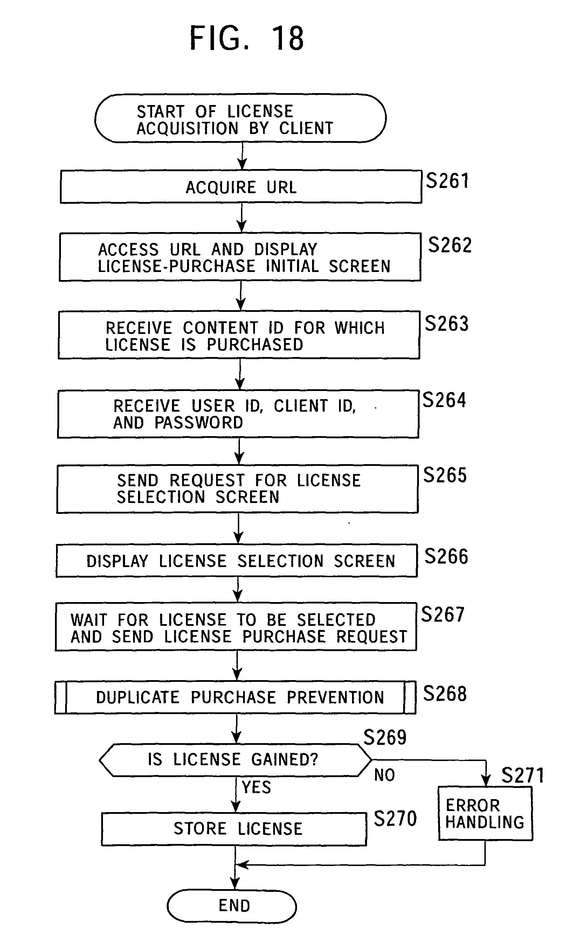

Fig. 18 is a flowchart illustrating a third embodiment of license acquisition by the client 1.

In license acquisition in Fig. 18, basically the same processing as in step S61 to step S71 of Fig. 7 is carried out in step S261 to step S271. In step S268 of Fig. 18, however, duplicate-purchase prevention different from that in step S68 of Fig. 7 is carried out.

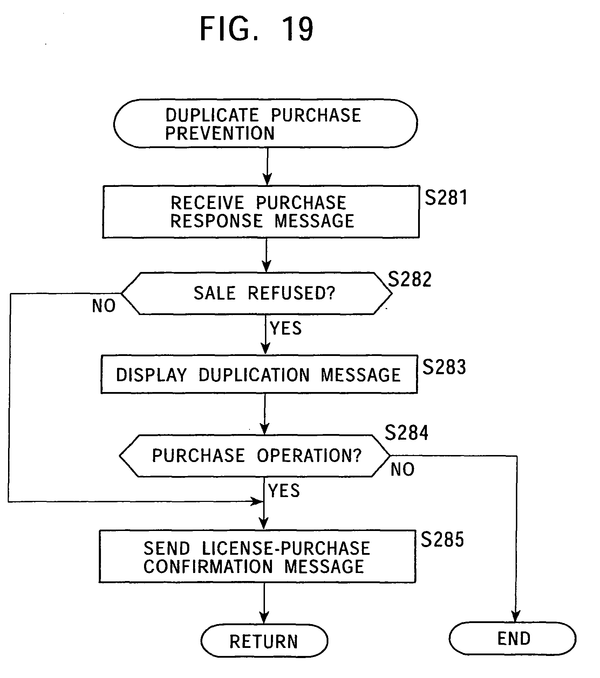

Duplicate-purchase prevention in step S268 of Fig. 18 will now be described with reference to the flowchart in Fig. 19.

In step S281 as the first step of duplicate-purchase prevention in Fig. 18, the client 1 waits for a purchase response message to be sent from the license server 4 via the Internet 2 and receives the purchase response message.

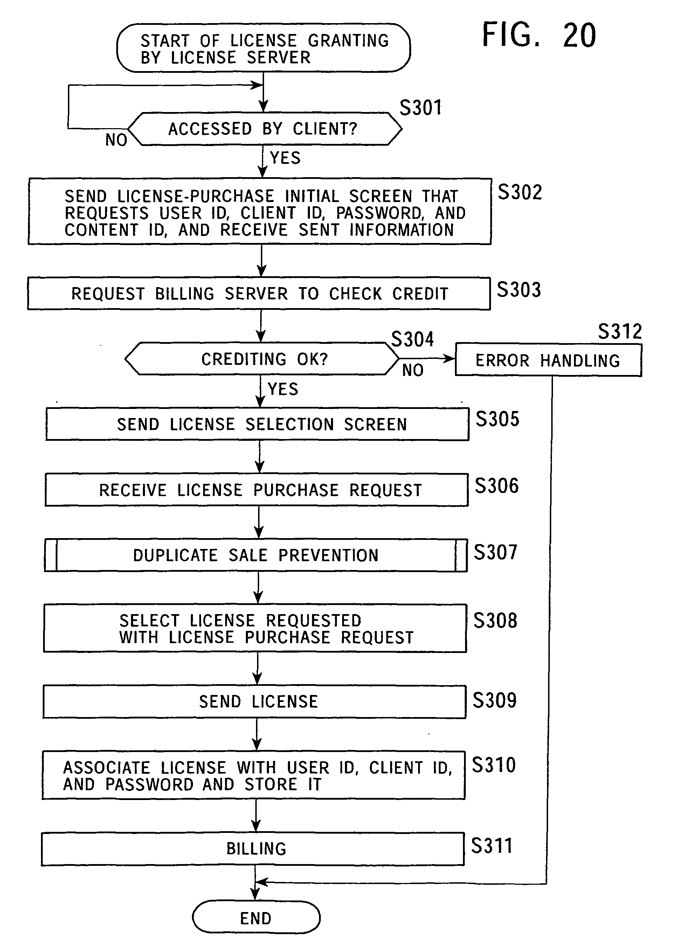

More specifically, in this embodiment, when the license server 4 receives a license-purchase request message from the client 1, a determination is made as to whether or not the license to be purchased by the user of the client 1 duplicates a license already held by the client 1, and a purchase response message indicating permission or refusal to sell the license is returned to the client 1 as a response to the license-purchase request message according to the determination result, as described later in the duplicate-sale prevention carried out in step S307 of Fig. 20. In step S281, the purchase response message sent from the license server 4 in this manner is received.

The client 1 receives the purchase response message in step S281, proceeds to step S282, and determines whether or not the purchase response message indicates refusal to sell the license. When a determination is made in step S282 that the purchase response message does not indicate refusal to sell the license, that is, when the purchase response message indicates permission to sell the license, the flow skips steps S283 and S284 to step S285, where the client 1, in step S267 of Fig. 18, sends a license-purchase confirmation message confirming the purchase of the license requested with the license-purchase request message to the license server 4 via the Internet 2, and returns to step S269 of Fig. 18.

The license server 4 that has received the license-purchase confirmation message sends, as described below, the license requested by the client 1 with the license-purchase request message in step S267 of Fig. 18. Thus, the client 1 receives the license in step S270 of Fig. 18.

On the other hand, when a determination is made in step S282 that the purchase response message from the license server 4 received by the client 1 in step S281 indicates refusal to sell the license, the flow proceeds to step S283, where the client 1 displays on the display of the output section 27 (Fig. 2) a duplication message indicating that the license to be purchased duplicates an already available license.

More specifically, the license server 4, as described below, determines whether or not the license requested by the client 1 with the license-purchase request message duplicates a license already held by the client 1. In the case where the license is duplicated, the license server 4 sends to the client 1 a purchase response message indicating refusal to sell the license. In the case where the license is not duplicated, the license server 4 sends to the client 1 a purchase response message indicating permission to sell the license.

Therefore, if the purchase response message indicates refusal to sell the license, it means that the license to be purchased by the client 1 duplicates a license already available, and therefore the client 1, in step S283, displays a duplication message indicating that the license is duplicated in the same manner as in step S87 of Fig. 9, and thereby, informs the user of the client 1 that he or she is attempting to purchase a duplicate license.

The client 1 displays a duplication message in step S283, proceeds to step S284, and determines whether or not the user has performed the purchase operation to purchase the license requested with the license-purchase request message.

When a determination is made in step S284 that the purchase operation has not been performed, that is, when the user informed of his/her attempt to purchase a duplicate license in step S283 cancels the purchase of the license requested with the license-purchase request message, duplicate-purchase prevention in Fig. 19 ends, and license acquisition in Fig. 18 also ends.

In this case, therefore, the purchase of the license requested first by the user with the license-purchase request message is not performed, and hence the user is prevented from purchasing a duplicate license.

On the other hand, when a determination is made in step S284 that the purchase operation has been performed, that is, despite the fact that the user was informed of his/her attempt to purchase a duplicate license in step S283, the user performed the purchase operation to express his/her wish to purchase a duplicate license, the flow proceeds to step S285, where, as described above, the client 1 sends a license-purchase confirmation message confirming the purchase of the license requested with the license-purchase request message to the license server 4 via the Internet 2, and returns to step S269 of Fig. 18.

In this case, as described above, the license server 4 that has received the license-purchase confirmation message sends the license requested by the client 1 with the license-purchase request message, and the client 1 receives the license in step S270 in Fig. 18. More specifically, in this case, the user purchases a license which duplicates another license already available. In this case, however, even though the user is informed of his/her attempt to purchase a duplicate license, the user purchases the duplicate license. Therefore, this does not cause a problem.

License granting carried out by the license server 4 in response to the license acquisition in Fig. 18 carried out by the client 1 will now be described with reference to the flowchart in Fig. 20.

In license granting in Fig. 20, basically the same processing as in step S101 to step S112 of Fig. 12 is carried out in step S301 to step S312. In step S307 of Fig. 20, however, duplicate-sale prevention different from that in step S107 of Fig. 12 is carried out.

More specifically, in step S307 of Fig. 20, the license server 4 determines whether or not the license which the client 1 has requested to purchase duplicates a license already held by the client 1, and returns the determination result to the client 1 as a purchase response message.

For this purpose, in this case, the license server 4 needs a list of the licenses purchased by the client 1 in order to determine whether or not the license the client 1 has requested to purchase duplicates a license already held by the client 1.

In step S310 of Fig. 20 corresponding to step S110 in Fig. 12, the license server 4 associates the license ID of the license purchased by the user of the client 1 with the user ID, client ID, and password sent from the client 1 and stores the data in the storage section 28 (Fig. 2).

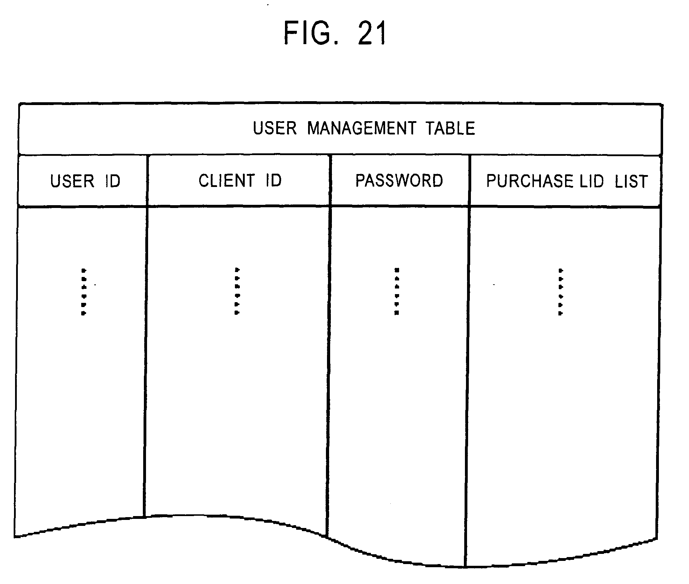

Fig. 21 is an illustration showing a user management table for registering a license ID associated with a user ID, a client ID, and password in the storage section 28 of the license server 4.

In Fig. 21, the user management table includes, for example, a user ID field, a client ID field, a password field, and a purchase LID list field from the left. In step S310 of Fig. 20, the license server 4 searches the user management table for an entry (line) in which the user ID, client ID, and password sent from the client 1 are registered, and sets that entry as an entry of interest. If an entry where the user ID, client ID, and password sent from the client 1 are registered does not exist in the user management table, the license server 4 generates a new entry for registering the user ID, client ID, and password sent from the client 1 to set it as an entry of interest. Then, the license server 4 additionally registers the license ID sent to the client 1 into the purchase LID list field of the entry of interest.

Thus, the license IDs of the licenses purchased so far by the user of the client 1 identified by the user ID, client ID, and password are registered in the user management table. Hence, by referring to the user management table in the license server 4, it is possible to determine whether or not the license the client 1 has requested to purchase duplicates a license already held (purchased) by the client 1.

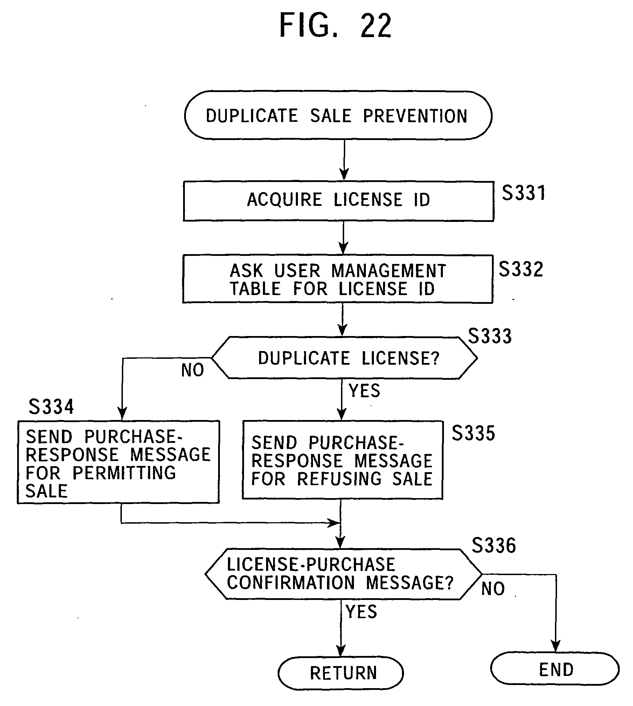

Duplicate-sale prevention carried out in step S307 of Fig. 20 will now be described with reference to the flowchart of Fig. 22.

The license server 4, in step S331 as the first step, obtains the license ID of the license requested with the license-purchase request message from the client 1, and proceeds to step S332. In step S332, the license server 4 makes an inquiry about the license IDs of the licenses purchased so far by the user of the client 1. More specifically, in step S332, the license server 4 searches the user management table shown in Fig. 21 for the entry where the user ID, client ID, and password sent from the client 1 are registered as an entry of interest, and obtains the license ID registered in the entry of interest.

Thereafter, the flow proceeds from step S332 to step S333, where the license server 4 determines whether or not the license with the license ID obtained in step S331 duplicates the license with the license ID obtained in step S332, that is, whether or not the license requested with the license request message from the client 1 duplicates a license purchased so far by the user of the client 1. The determination in step S333 can be made in the same manner as in step S82 of Fig. 9.

When a determination is made in step S333 that the license requested with the license request message from the client 1 does not duplicate a license purchased so far by the user of the client 1, the flow proceeds to step S334, where the license server 4 sends a purchase response message indicating permission to sell the license to the client 1, and then proceeds to step S336.

When a determination is made in step S333 that the license requested with the license request message from the client 1 duplicates a license purchased so far by the user of the client 1, the flow proceeds to step S335, where the license server 4 sends a purchase response message indicating refusal to sell the license to the client 1, and then proceeds to step S336.

In step S336, the license server 4 determines whether or not a license-purchase confirmation message has been sent from the client 1.

In step S336, when a determination is made that a license-purchase confirmation message has not been sent from the client 1, the license server 4 ends the duplicate-sale prevention in Fig. 22, and also ends the license granting in Fig. 20.

Therefore, in this case, the license requested by the client 1 is not sold from the license server 4 to the client 1.

On the other hand, in step S336, when a determination is made that a license-purchase confirmation message has been sent from the client 1, the license server 4 returns to the step S308 in Fig. 20.

Thus, in this case, the license requested by the client 1 is sold by the license server 4 to the client 1.

As described above, a determination is made in the license server 4 as to whether or not the license requested by the client 1 duplicates a license already held by the client 1, and, according to the determination result, the user of the client 1 is informed that the license requested by the client 1 duplicates a license already held by the client 1. Thus, the user of the client 1 is prevented from purchasing a duplicate license.

In the case described above, the user management table shown in Fig. 21 is managed in the license server 4. However, the user management table can be managed in a server other than the license server 4.

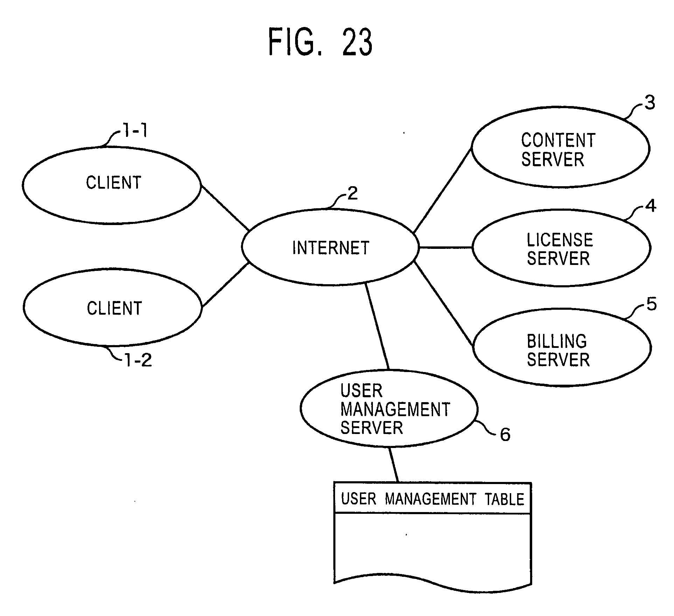

Fig. 23 shows an exemplary structure of an embodiment of a content provision system where the content provision system in Fig. 1 is provided with a user management server 6 for managing the user management table in Fig. 21.

In the content provision system in Fig. 23, the license acquisition in Fig. 18 is carried out in the client 1 and the license granting in Fig. 20 is carried out in the license server 4. The license server 4, however, makes the user management server 6 carry out the processing in step S310 of Fig. 20 for registering, in the user management table of Fig. 21, the license ID of the license purchased by the user of the client 1 and the user ID, client ID, and password of the client 1 by communicating with the user management server 6 via the Internet 2. Furthermore, the license server 4 makes the user management server 6 carry out, by communicating with the user management server 6 via the Internet 2, the following processing: that is, the processing in step S332 of Fig. 22 for acquiring the license ID registered in the entry in which the user ID, client ID, and password sent from the client 1 are registered and the processing in step S333 for determining whether or not the license requested with the license-purchase request message from the client 1 duplicates the license with the license ID obtained in step S332.

Also in this case, the user is prevented from purchasing a duplicate license.

In this embodiment, if the license the user is attempting to purchase duplicates an already purchased license, a message indicating that the license is duplicated is displayed. In this case, a message indicating, for example, what types of duplication (for example, the period of time for which the content can be played back) exist can also be displayed.

In the present invention, the steps of programs for making the CPU 21 perform various types of processing may or may not be followed time-sequentially in order of the steps described in the flowcharts. Instead, the steps may be followed in parallel or independently from one another (including, for example, parallel processing or processing based on objects).

In addition, the program may be processed by a single apparatus or may be subjected to distributed processing by a plurality of apparatuses. Furthermore, the program may be transferred to an apparatus located far away and executed in the apparatus.

### Industrial Applicability

As described so far, according to the present invention, the purchase of a duplicate license can be prevented.

## Claims

1. An information processing system comprising:
a license server providing a license for utilizing content; and
a terminal requesting the license from the license server, obtaining the license, and utilizing the content based on the license,
wherein one of the license server and the terminal includes:
duplicate-license determination means for determining whether or not the license requested by the terminal from the license server duplicates a license already held by the terminal, and
wherein the terminal includes:
license-duplication reporting means for reporting license duplication indicating that the license requested by the terminal from the license server duplicates a license already held by the terminal according to the determination result by the duplicate-license determination means.

2. An information processing apparatus for requesting a license from a license server providing the license for utilizing content, obtaining the license, and utilizing the content based on the license, comprising:
duplicate-license determination means for determining whether or not a license requested from the license server duplicates an already available license; and
license-duplication reporting means for reporting license duplication indicating that the license requested from the license server duplicates an already available license according to the determination result by the duplicate-license determination means.

3. The information processing apparatus according to claim 2, further comprising:
purchase-requesting means for requesting a purchase of the license from the license server according to an operation of a user,
wherein the duplicate-license determination means determines whether or not the license to be purchased duplicates an already available license after or before the purchase-requesting means requests a purchase of the license from the license server.

4. The information processing apparatus according to claim 2, further comprising:
confirming means for confirming whether or not a license which duplicates an already available license is purchased when license duplication is reported by the license-duplication reporting means.

5. The information processing apparatus according to claim 2, further comprising:
license-identification-information acquiring means for acquiring license identification information of a license required to utilize content from the license server; and
license-list storage means for storing a license list of licenses already purchased,
wherein the duplicate-license determination means determines whether or not a license requested from the license server duplicates an already available license by comparing the license identification information acquired by the license-identification-information acquiring means with the license list stored by the license-list storage means.

6. A method for processing information for requesting a license from a license server providing the license for utilizing content, obtaining the license, and utilizing the content based on the license, the method comprising:
a duplicate-license determination step of determining whether or not a license requested from the license server duplicates an already available license; and
a license-duplication reporting step of reporting license duplication indicating that the license requested from the license server duplicates an already available license according to the determination result in the duplicate-license determination step.

7. A computer-executable program for processing information for requesting a license from a license server providing the license for utilizing content, obtaining the license, and utilizing the content based on the license, the program comprising:
a duplicate-license determination step of determining whether or not a license requested from the license server duplicates an already available license; and
a license-duplication reporting step of reporting license duplication indicating that the license requested from the license server duplicates an already available license according to the determination result in the duplicate-license determination step.

8. A recording medium recording a computer-executable program for processing information for requesting a license from a license server providing the license for utilizing content, obtaining the license, and utilizing the content based on the license, the program comprising:
a duplicate-license determination step of determining whether or not a license requested from the license server duplicates an already available license; and
a license-duplication reporting step of reporting license duplication indicating that the license requested from the license server duplicates an already available license according to the determination result in the duplicate-license determination step.

9. An information processing apparatus for requesting a license from a license server providing the license for utilizing content, obtaining the license, and utilizing the content based on the license, the information processing system comprising:
determination-result receiving means for receiving from the license server a result of determination as to whether or not a license requested from the license server duplicates an already available license; and
license-duplication reporting means for reporting license duplication indicating that the license requested from the license server duplicates an already available license according to the result of determination as to license duplication received by the determination-result receiving means.

10. The information processing apparatus according to claim 9, further comprising:
confirming means for confirming whether or not a license which duplicates an already available license is purchased when license duplication is reported by the license-duplication reporting means.

11. The information processing apparatus according to claim 9, further comprising:
content-identification-information sending means for sending to the license server content identification information for identifying the content to be utilized,
wherein the determination-result receiving means receives from the license server a result of determination as to whether or not the license required to utilize the content identified with the content identification information sent by the content-identification-information sending means duplicates an already available license.

12. A method for processing information for requesting a license from a license server providing the license for utilizing content, obtaining the license, and utilizing the content based on the license, the method comprising:
a determination-result receiving step of receiving from the license server a result of determination as to whether or not the license requested from the license server duplicates an already available license; and
a license-duplication reporting step of reporting license duplication indicating that the license requested from the license server duplicates an already available license according to the result of determination as to license duplication received in the determination-result receiving step.

13. A computer-executable program for processing information for requesting a license from a license server providing the license for utilizing content, obtaining the license, and utilizing the content based on the license, the program comprising:
a determination-result receiving step of receiving from the license server a result of determination as to whether or not the license requested from the license server duplicates an already available license; and
a license-duplication reporting step of reporting license duplication indicating that the license requested from the license server duplicates an already available license according to the result of determination as to license duplication received in the determination-result receiving step.

14. A recording medium recording a computer-executable program for processing information for requesting a license from a license server providing the license for utilizing content, obtaining the license, and utilizing the content based on the license, the program comprising:
a determination-result receiving step of receiving from the license server a result of determination as to whether or not the license requested from the license server duplicates an already available license; and
a license-duplication reporting step of reporting license duplication indicating that the license requested from the license server duplicates an already available license according to the result of determination as to license duplication received in the determination-result receiving step.

15. An information processing apparatus for providing a license for utilizing content in response to a request by a terminal utilizing the content, comprising:
query means for making an inquiry about licenses already held by the terminal;
duplicate-license determination means for determining whether or not the license requested by the terminal duplicates a license already held by the terminal; and
determination-result sending means for sending a determination result by the duplicate-license determination means to the terminal.

16. The information processing apparatus according to claim 15, further comprising:
license-information storage means for storing information about the license provided to the terminal,
wherein the query means asks the license-information storage means for licenses already held by the terminal.

17. The information processing apparatus according to claim 15, wherein the query means asks a management server managing information about the license provided to the terminal for licenses already held by the terminal.

18. The information processing apparatus according to claim 15, wherein, when the duplicate-license determination means determines that the license requested by the terminal duplicates a license already held by the terminal and when a message confirming purchase of the license that duplicates the license already held by the terminal is sent from the terminal, the license requested by the terminal is provided to the terminal.

19. A method for processing information for providing a license for utilizing content in response to a request by a terminal utilizing the content, the method comprising:
a query step of making an inquiry about licenses already held by the terminal;
a duplicate-license determination step of determining whether or not the license requested by the terminal duplicates a license already held by the terminal; and
a determination-result sending step of sending a determination result in the duplicate-license determination step to the terminal.

20. A computer-executable program for processing information for providing a license for utilizing content in response to a request by a terminal utilizing the content, the program comprising:
a query step of making an inquiry about licenses already held by the terminal;
a duplicate-license determination step of determining whether or not the license requested by the terminal duplicates a license already held by the terminal; and
a determination-result sending step of sending a determination result in the duplicate-license determination step to the terminal.

21. A recording medium recording a computer-executable program for processing information for providing a license for utilizing content in response to a request by a terminal utilizing the content, the program comprising:
a query step of making an inquiry about licenses already held by the terminal;
a duplicate-license determination step of determining whether or not the license requested by the terminal duplicates a license already held by the terminal; and
a determination-result sending step of sending a determination result in the duplicate-license determination step to the terminal.
